(19) Europäisches Patentamt
European Patent Office
Office européen des brevets

(11) **EP 4 350 507 A1**

(12) **EUROPEAN PATENT APPLICATION**
published in accordance with Art. 153(4) EPC

(43) Date of publication:
**10.04.2024 Bulletin 2024/15**

(21) Application number: **22831949.7**

(22) Date of filing: **27.06.2022**

(51) International Patent Classification (IPC):
**G06F 8/70** *(2018.01)*

(52) Cooperative Patent Classification (CPC):
**G06F 8/70; H04L 67/133; H04L 67/60**

(86) International application number:
**PCT/CN2022/101469**

(87) International publication number:
**WO 2023/274135 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.06.2021 CN 202110721122**

(71) Applicant: **Huawei Technologies Co., Ltd.
Shenzhen, Guangdong 518129 (CN)**

(72) Inventors:
• **FAN, Xiaoping**
**Shenzhen, Guangdong 518129 (CN)**
• **YAN, Fangfang**
**Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **DATA PROCESSING SYSTEM, METHOD AND APPARATUS**

(57)    This application relates to the field of program code in computer technologies, and discloses a data processing system, method, and apparatus. The method includes: A first network device sends first request information to a second network device, where the first request message carries a first process context corresponding to a target task, and the first process context includes a program code set, first indication information, and a target parameter. The second network device determines, based on the first indication information, a location of a first start line in the program code set from program code included in the program code set, and runs the program code in the program code set based on the target parameter and by using the first start line as a start point, to complete at least one to-be-executed sub-task in the target task, where the target parameter is a parameter required when the to-be-executed sub-task is executed. Therefore, the first network device can request, based on a real requirement of the first network device, the second network device to execute a corresponding task, thereby improving implementation flexibility of this solution.

FIG. 2

**Description**

This application claims priority to Chinese Patent Application No. 202110721122.X, filed with the China National Intellectual Property Administration on June 28, 2021 and entitled "DATA PROCESSING SYSTEM, METHOD, AND APPARATUS", which is incorporated herein by reference in its entirety.

**TECHNICAL FIELD**

This application relates to the field of artificial intelligence, and in particular, to a data processing system, method, and apparatus.

**BACKGROUND**

With the advent of a big data era, a to-be-processed data volume is increasingly large, and a network device storing data (which may also be referred to as a data storage node) and a network device computing data (which may also be referred to as a data computing node) are usually separated. A conventional method is to transmit data in the storage node to the computing node through a network, and the computing node computes the data. However, due to an excessively large to-be-transmitted data volume, there are still excessively high costs of migrating big data through the network.

To resolve the foregoing problem, specifically, program code corresponding to at least one task may be preconfigured on the storage node. The computing node sends a request message to the storage node, where the request message indicates a target type of a to-be-called task. After receiving the request message, the storage node executes the task of the target type.

However, because the storage node can execute only a plurality of preconfigured tasks, that is, the computing node can request the storage node to execute only a plurality of preconfigured tasks, the computing node cannot request, based on a requirement of the computing node, the storage node to execute a task of any type.

**SUMMARY**

This application provides a data processing system, method, and apparatus, so that a first network device can request, based on a requirement of the first network device, a second network device to execute a corresponding task, thereby improving implementation flexibility of this solution.

To resolve the foregoing technical problem, this application provides the following technical solutions.

According to a first aspect, this application provides a data processing system, which is applied to the field of program code in computer technologies. The data processing system includes a first network device and a second network device. The first network device is configured to: obtain first request information, and send the first request information to the second network device, where the first request message carries a first process context corresponding to a target task. Further, the first process context includes at least a target program code set, a register segment, and a data segment that correspond to the entire target task. If at least one line of program code in the target program code set is executed, at least one to-be-executed sub-task included in the target task can be completed. If the entire target program code set is executed, the target task can be completed. The register segment includes at least a value in a program counter PC register, and the value in the PC register indicates an address of program code to be executed, that is, the first process context includes first indication information. One or more lines of program code included in the target program code set include at least one variable. The data segment is used to store a value of a static variable in the target program code set, and the data segment stores at least all target parameters required for completing the target task, that is, variables corresponding to the target parameters are static variables. The second network device is configured to: receive the first request message, and determine, based on the first indication information, a location of a first start line in the target program code set from the at least one line of program code included in the target program code set, where the first start line is a start point when the second network device executes program code in the target program code set; and run, based on the at least one target parameter and by using the first start line of the at least one line of program code as the start point, the at least one line of program code included in the target program code set, to complete at least one to-be-executed sub-task included in the target task, where the target parameter is a parameter required when the at least one to-be-executed sub-task is executed.

In this implementation, the first network device sends the first request information to the second network device, where the first request information carries the target program code set, the first indication information, and the at least one target parameter that correspond to the target task. The second network device determines the location of the first start line in the target program code set from the target program code set based on the first indication information, and runs the at least one line of program code in the target program code set based on the target parameter and by using the first start line as the start point, to complete the at least one sub-task included in the target task, where the target parameter is the parameter required when the at least one to-be-executed sub-task is executed. Because the target program code set carried in the first request information can reflect an actual requirement of the first network device, that is, the first network device can request, based on an actual requirement of the first network device, the second network device to execute a corresponding task, thereby improving implementation flexibility of this solution.

In a possible implementation of the first aspect, the second network device is further configured to: execute target program code, where the target program code is included in the program code set, and the target program code indicates the second network device to perform a packet encapsulation operation to obtain a second request message; and send the second request message to a third network device. Further, the second request message includes a second process context, and the second process context is a process context. Because the second network device has executed the at least one line of program code in the target program code set through a process, the second process context includes at least the target program code set, a register segment, and content and data segments of all stacks related to the foregoing process. Further, the register segment stores values of all physical registers related to execution of the target task when the target task is interrupted, so that when the target task is resumed on a network device, the values in the register segment are restored to physical registers of the network device. The register segment includes a value of a PC register, that is, the second process context includes second indication information. The second indication information indicates a location of a second start line, in the target program code set, of the at least one line of program code included in the target program code set. The second start line is a start point when the third network device executes the program code in the target program code set, and the locations of the second start line and the first start line in the target program code set are different. The second network device runs the at least one line of program code in the target program code set through the process, to implement at least one function. A stack is automatically allocated and released in a process of running a function by a process, and content in the stack is content in the foregoing stack. The data segment is used to store a value of a static variable in the target program code set, and the data segment can carry a value of a static variable in the target program code set that is generated in a process in which the second network device runs the at least one line of program code. The value of the static variable in the target program code set generated by the second network device, the value in the register segment, and content of all stacks related to the process may be collectively referred to as an intermediate result. In other words, the second process context carries at least the target program code set, the second indication information, and at least one intermediate result, where the intermediate result is intermediate data generated by the second network device in the process of running the at least one line of program code by the second network device.

In this implementation, the second process context is encapsulated in the second request message, the second process context carries the target program code set, the second indication information, and the at least one intermediate result, that is, which line in the target program code set has been run and the intermediate data generated by the second network device in the process of running the at least one line of program code by the second network device may be known based on the second process context. Therefore, after the second network device sends the second request message to another network device, the another network device can continue to execute a next to-be-executed sub-task in the target task. This implements pipelined mutual assistance between a plurality of network devices, and completes the complete target task.

In a possible implementation of the first aspect, the target program code may be represented as a migration function. After the second network device invokes the migration function, the second network device is triggered to re-execute the packet encapsulation operation, to obtain the second request message, and send the second request message to the third network device. Alternatively, the target program code does not include a migration function, but directly includes code corresponding to a migration operation "re-perform the packet encapsulation operation and send the obtained second request message to the third network device", that is, when the second network device executes the target program code, execution of the migration operation is directly triggered.

In a possible implementation of the first aspect, when the first request message carries a first mapping relationship, in a process in which the second network device runs the at least one line of program code in the target program code set, if the second network device determines, based on the first mapping relationship, that to-be-accessed data is on a remote network device, the second network device may also trigger re-execution of the packet encapsulation operation, to send the second request message to the network device that stores the to-be-accessed data. That is, when the second network device determines, based on a first mapping relationship, that to-be-accessed data is in a shared memory on a remote network device, re-execution of the packet encapsulation operation may be triggered again. It should be noted that the second network device may need to access a shared memory on the first network device, or may need to access a shared memory on a network device other than the first network device and the second network device. A specific remote network device on which the to-be-accessed data is located should be flexibly determined with reference to a requirement of an actual application scenario.

In a possible implementation of the first aspect, the first request information further includes a first mapping relationship, the target program code set, the first indication information. The at least one target parameter, and the first mapping relationship all belong to a same program virtual machine. The target program code set belongs to a code segment of the program virtual machine, the first indication information belongs to a register segment of the program virtual machine, and the target parameter belongs to a data segment of the program virtual machine. The first mapping relationship is used to store a one-to-one correspondence between at least one first address and at least one second address. The at least one first address may include a virtual address of the data segment, the code segment, the register segment, and a stack segment in the program virtual machine. Correspondingly, the at least one second address may include a storage address of the data segment, the code segment, the register segment, and the stack segment in the program virtual machine in a network device that stores the data segment. Further, the storage address in the network device may be a virtual address in the network device, or may be a physical address in the network device.

In this implementation, the program code set, the first indication information, the at least one target parameter, and the first mapping relationship are encapsulated in the same program virtual machine, and the first mapping relationship indicates a virtual address, in the program virtual machine, of data in the program virtual machine and a storage address, in a stored network device, of the data in the program virtual machine. That is, when a network device runs the program code in the program code set through a process, security isolation can be implemented between the process and a process that is locally run on the network device.

In a possible implementation of the first aspect, the method is applied to a remote procedure call RPC scenario, and the target task may include at least one RPC task. If the target task includes two or more RPC tasks, the target program code set can implicitly include an execution sequence of different RPC tasks in the at least two RPC tasks. The RPC task generally refers to a task that a current network device requests a remote network device to execute. Because each network device in a data processing system sequentially executes the program code in the target program code set based on an indication of a PC register, the target program code set can implicitly include the execution sequence of the different RPC tasks in the at least two RPC tasks.

This implementation provides a specific application scenario of this solution, and improves a degree of combination between this solution and the specific application scenario.

In a possible implementation of the first aspect, if the target program code set includes program code in a form of a target intermediate language, the first request message further includes third indication information, where the third indication information indicates a type of the target intermediate language. Further, the third indication information may include an arch field and a version (version) field. A value in the arch field indicates a type of intermediate language used by the target program code set, and a value in the version field indicates a version number of the intermediate language used by the target program code set.

In this implementation, the first network device and the second network device may be different machines, and the form of the target intermediate language is used for the target program code set. Therefore, when a network device runs the program code in the target program code set, the program code may be compiled into a machine language appropriate for a type of the network device. Therefore, the solution provided in this embodiment of this application can be compatible with various types of network devices, and help extend an application scenario of this solution.

In a possible implementation of the first aspect, the target program code set includes program code corresponding to an inline function, and the inline function is a function whose function body is in the target program code set.

In this implementation, because the inline function is the function whose function body is in the target program code set, the inline function can be directly run based on the program code in the target program code set, and a local call address of the function does not need to be determined, and program code corresponding to the function body does not need to be locally called. This helps improve efficiency of an entire target task execution process, can define the function in a customized manner by directly writing the function body into the target program code set, that is, extend a type of a function that can be executed, and helps further improve flexibility of this solution.

In a possible implementation of the first aspect, the target program code set includes program code corresponding to a non-inline function, and the non-inline function is a function whose function body is not in the target program code set. The first network device is further configured to obtain a function number that is of a target non-inline function and that corresponds to a function name of the target non-inline function, where the first request message carries the function number of the target non-inline function, and the target non-inline function is one of at least one non-inline function corresponding to the target program code set. The second network device is specifically configured to obtain a call address of the target non-inline function in the second network device based on the function number of the target non-inline function, to run the target non-inline function.

In this implementation, because the function number is generally simpler than the function name, compared with directly using the function name of the non-inline function to search for the call address of the function, using the function number of the non-inline function to search for the call address of the function can improve efficiency of calling the non-inline function, and help improve execution efficiency of the entire target task.

In a possible implementation of the first aspect, the first network device is further configured to obtain a function number of a target non-inline function based on a function name of the target non-inline function and a second mapping relationship, where the first request message carries the function number of the target non-inline function, the target non-inline function is one of at least one non-inline function corresponding to the program code set, and the second mapping relationship includes a mapping relationship between the function name of the target non-inline function and the function number of the target non-inline function. The second network device is specifically configured to obtain a call address of the target non-inline function in the second network device based on the function number of the target non-inline function and a third mapping relationship, to run the target non-inline function, where the third mapping relationship includes a mapping relationship between the function number of the target non-inline function and the call address of the target non-inline function in the second network device.

In a possible implementation of the first aspect, a rule for generating a function number of a non-inline function may be preconfigured on the first network device, and the first network device may generate the function number of the target non-inline function based on a function name of the target non-inline function and the preconfigured rule. The second network device is specifically configured to obtain a call address of the target non-inline function in the second network device based on the function number of the target non-inline function and a third mapping relationship, to run the target non-inline function, where the third mapping relationship includes a mapping relationship between the function number of the target non-inline function and the call address of the target non-inline function in the second network device.

According to a second aspect, this application provides a data processing method, which is applied to the field of program code in computer technologies. The method may include: A second network device receives a first request message, where the first request message carries a first process context corresponding to a target task, the first process context includes a program code set, first indication information, and at least one target parameter, and the program code set includes at least one line of program code. The second network device determines, based on the first indication information, a location of a first start line in the program code set from the at least one line of program code included in the program code set; and runs, based on the at least one target parameter and by using the first start line of the at least one line of program code as a start point, the at least one line of program code included in the program code set, to complete at least one to-be-executed sub-task included in the target task, where the target parameter is a parameter required when the at least one to-be-executed sub-task is executed.

In the second aspect of this application, the second network device is further configured to perform other steps performed by the second network device in the first aspect. For specific implementation steps of the possible implementations of the second aspect and beneficial effect brought by each possible implementation, refer to descriptions in the possible implementations of the first aspect. Details are not described herein again.

According to a third aspect, this application provides a data processing method, which is applied to the field of program code in computer technologies. The method may include: A first network device obtains first request information, and sends the first request information to a second network device, where the first request message carries a first process context corresponding to a target task, the first process context includes a program code set, first indication information, and at least one target parameter, if at least one line of program code in the program code set is executed, at least one to-be-executed sub-task included in the target task can be completed, the first indication information indicates a location, in the program code set, of a first start line of the at least one line of program code included in the program code set, and the target parameter is a parameter required when the at least one to-be-executed sub-task is executed.

In the third aspect of this application, the first network device is further configured to perform other steps performed by the first network device in the first aspect. For specific implementation steps of the possible implementations of the third aspect and beneficial effect brought by each possible implementation, refer to descriptions in the possible implementations of the first aspect. Details are not described herein again.

According to a fourth aspect, this application provides a data processing apparatus, which is applied to the field of program code in computer technologies. The data processing apparatus may include: a receiving module, configured to receive a first request message, where the first request message carries a first process context corresponding to a target task, the first process context includes a program code set, first indication information, and at least one target parameter, and the program code set includes at least one line of program code; a determining module, configured to determine, based on the first indication information, a location of a first start line in the program code set from the at least one line of program code included in the program code set; and a running module, configured to run, based on the at least one target parameter and by using the first start line of the at least one line of program code as a start point, the at least one line of program code included in the program code set, to complete at least one to-be-executed sub-task included in the target task, where the target parameter is a parameter required when the at least one to-be-executed sub-task is executed.

In the fourth aspect of this application, the data processing apparatus is further configured to perform other steps performed by the second network device in the first aspect. For specific implementation steps of the possible implementations of the fourth aspect and beneficial effect brought by each possible implementation, refer to descriptions in the possible implementations of the first aspect. Details are not described herein again.

According to a fifth aspect, this application provides a data processing apparatus, which is applied to the field of program code in computer technologies. The data processing apparatus includes: an obtaining module, configured to obtain first request information; and a sending module, configured to send the first request information to a second network device, where the first request message carries a first process context corresponding to a target task, the first process context includes a program code set, first indication information, and at least one target parameter, if at least one line of program code in the program code set is executed, at least one to-be-executed sub-task included in the target task can be completed, the first indication information indicates a location, in the program code set, of a first start line of the at least one line of program code included in the program code set, and the target parameter is a parameter required when the at least one to-be-executed sub-task is executed.

In the fifth aspect of this application, the data processing apparatus is further configured to perform other steps performed by the first network device in the first aspect. For specific implementation steps of the possible implementations of the fifth aspect and beneficial effect brought by each possible implementation, refer to descriptions in the possible implementations of the first aspect. Details are not described herein again.

According to a sixth aspect, this application provides a network device. The network device may include a processor, the processor is coupled to a memory, the memory stores program instructions, and when the program instructions stored in the memory are executed by the processor, the steps performed by the first network device in the method according to the first aspect are implemented, or when the program instructions stored in the memory are executed by the processor, the steps performed by the second network device in the method according to the first aspect are implemented.

According to a seventh aspect, this application provides a computer-readable storage medium. The computer-readable storage medium stores a computer program, and when the computer program is run on a computer, the computer is enabled to perform the steps performed by the first network device in the method according to the first aspect; or the computer is enabled to perform the steps performed by the second network device in the method according to the first aspect.

According to an eighth aspect, this application provides a computer program. When the computer program is run on a computer, the computer is enabled to perform the steps performed by the first network device in the method according to the first aspect, or the computer is enabled to perform the steps performed by the second network device in the method according to the first aspect.

According to a ninth aspect, this application provides a circuit system. The circuit system includes a processing circuit, and the processing circuit is configured to perform the method in the foregoing aspects.

According to a tenth aspect, this application provides a chip system. The chip system includes a processor, configured to implement functions in the foregoing aspects, for example, sending or processing data and/or information in the foregoing methods. In a possible design, the chip system further includes a memory. The memory is configured to store program instructions and data that are necessary for a server or a communication device. The chip system may include a chip, or may include a chip and another discrete component.

## BRIEF DESCRIPTION OF DRAWINGS

FIG. 1 is a schematic flowchart of a data processing method according to an embodiment of this application;

FIG. 2 is a schematic flowchart of a data processing method according to an embodiment of this application;

FIG. 3 is a schematic diagram of a structure of program code in a data processing method according to an embodiment of this application;

FIG. 4 is a schematic diagram of two types of encapsulated content of a first request message in a data processing method according to an embodiment of this application;

FIG. 5 is a schematic diagram of encapsulated content of a first request message in a data processing method according to an embodiment of this application;

FIG. 6 is a schematic diagram of running a non-inline function in a data processing method according to an embodiment of this application;

FIG. 7 is another schematic flowchart of a data processing method according to an embodiment of this application;

FIG. 8 is a schematic flowchart of triggering a second network device to perform packet encapsulation in a data processing method according to an embodiment of this application;

FIG. 9 is a still another schematic flowchart of a data processing method according to an embodiment of this application;

FIG. 10 is a schematic diagram of beneficial effect brought by an embodiment of this application;

FIG. 11 is a schematic diagram of a structure of a data processing system according to an embodiment of this application;

FIG. 12 is another schematic diagram of a structure of a data processing system according to an embodiment of this application;

FIG. 13 is a schematic diagram of a structure of a data processing apparatus according to an embodiment of this application;
FIG. 14 is another schematic diagram of a structure of a data processing apparatus according to an embodiment of this application;
FIG. 15 is still another schematic diagram of a structure of a data processing apparatus according to an embodiment of this application; and
FIG. 16 is a schematic diagram of a structure of a network device according to an embodiment of this application.

**DESCRIPTION OF EMBODIMENTS**

In the specification, claims, and accompanying drawings of this application, the terms "first", "second", and the like are intended to distinguish between similar objects but do not necessarily indicate a specific order or sequence. It should be understood that the terms used in such a way are interchangeable in appropriate circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The following describes embodiments of this application with reference to the accompanying drawings. A person of ordinary skill in the art may learn that, with development of technologies and emergence of new scenarios, the technical solutions provided in embodiments of this application are also applicable to a similar technical problem.

Embodiments of this application are applied to an application scenario in which a distributed data processing system is used. The foregoing plurality of application scenarios may include an application scenario in which a remote procedure call (remote procedure call, RPC) protocol is used, or may include an application scenario in which an RPC protocol is not used. The RPC protocol is a protocol for requesting a service from a remote computer device by a network without a need to understand an underlying network technology. The RPC protocol generally uses a client/server mode. A client sends a request message carrying a parameter to a remote server. After receiving the request message, the remote server executes a task based on the parameter carried in the request message to obtain a computation result.

The entire data processing system includes at least two network devices. The at least two network devices include a first network device and a second network device. A communication connection is established between the first network device and the second network device. To better understand the application scenario of embodiments of this application, for example, the entire data processing system includes a network device 1, a network device 2, and a network device 3. The network device 1 wants to obtain a historical consumption record of a consumer that is older than or equal to 60, that is, a target task is to obtain a historical consumption record of a consumer that is older than or equal to 60. The network device 2 stores an identifier, an age, and a gender of each consumer. The network device 3 stores the identifier of each consumer, a name of a purchased commodity, and a purchase quantity of each commodity. In this case, the network device 1 needs to first obtain, from the network device 2, an identifier of the consumer that is older than or equal to 60, and then obtain, from the network device 3 based on the identifier of the consumer that is older than or equal to 60, the historical consumption record of the consumer that is older than or equal to 60. The network device 3 sends the historical consumption record of the consumer that is older than or equal to 60 to the network device 1, to complete the entire target task. It should be understood that the foregoing example of the application scenario is merely used to facilitate understanding of this solution, and is not used to limit this solution.

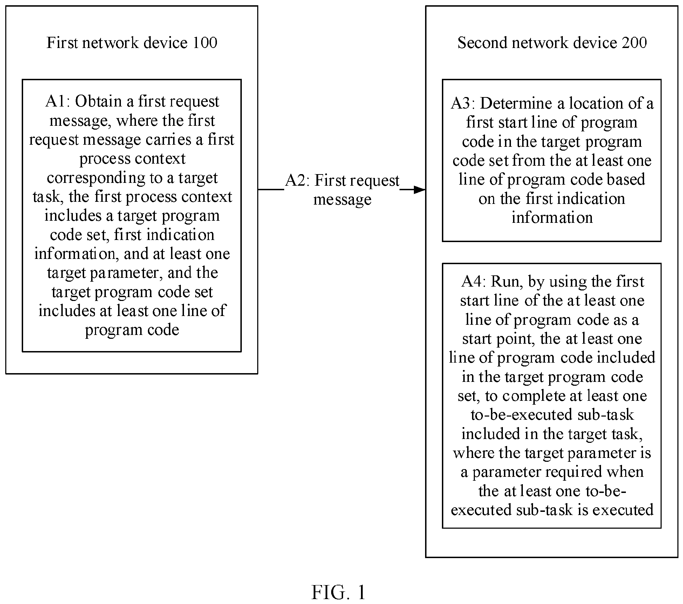

In the foregoing application scenario, a current network device (namely, the first network device) may request a remote network device (namely, the second network device) to perform at least one task. To enable the first network device to request, based on a real requirement of the first network device, the second network device to perform any type of task, an embodiment of this application provides a data processing method. FIG. 1 is a schematic flowchart of the data processing method according to this embodiment of this application. An entire data processing system includes a first network device 100 and a second network device 200. A communication connection is established between the first network device 100 and the second network device 200. Specifically, A1: The first network device 100 obtains a first request message, where the first request message carries a first process context corresponding to a target task, the first process context includes a target program code set, first indication information, and at least one target parameter, and the target program code set includes at least one line of program code. A2: The first network device 100 sends the first request message to the second network device 200. Correspondingly, the second network device 200 receives the first request message sent by the first network device 100. A3: The second network device 200 determines a location of a first start line of program code in the target program code set from the at least one line of program code based on the first indication information. A4: The second network device 200 runs, based on the at least one target parameter and by using the first start line of the at least one line of program code as a start point, the at least one line of program code included in the target program code set, to complete at least one to-be-executed sub-task included in the target task, where the target parameter is a parameter required when the at least one to-be-executed sub-task is executed. Because the program code set carried in the first request information can reflect an actual requirement of the first network device, that is, the first network device can request, based on an actual requirement of the first network device, the second network device to execute a corresponding task, thereby improving implementation flexibility of this solution.

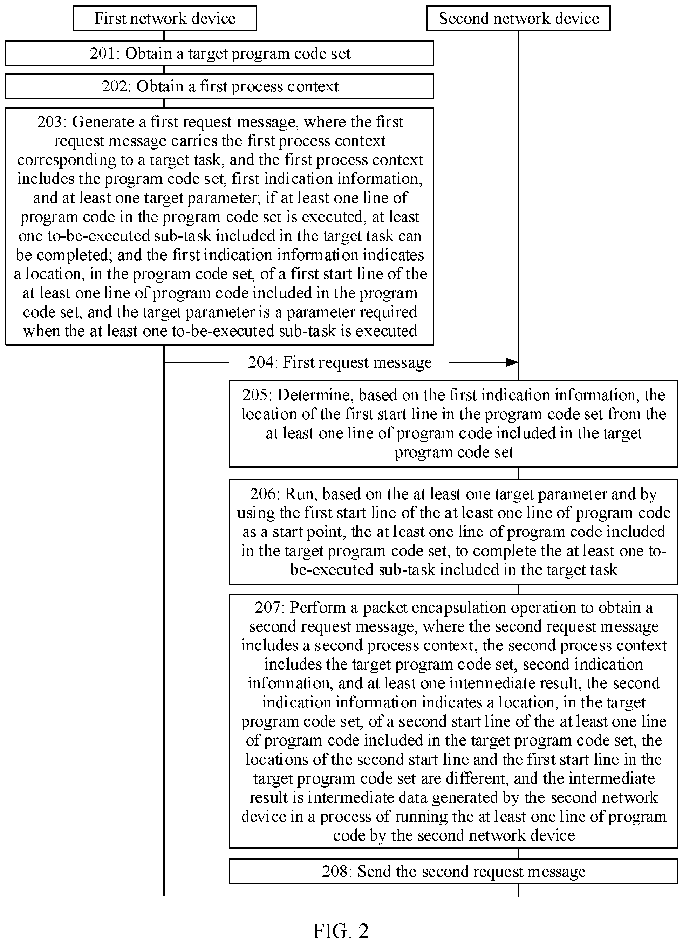

More specifically, with reference to FIG. 2, an embodiment of this application is described in detail. FIG. 2 is a schematic flowchart of a data processing method according to this embodiment of this application. The data processing method provided in this embodiment of this application may include the following steps.

201: A first network device obtains a target program code set.

In this embodiment of this application, the first network device needs to obtain the program code set corresponding to an entire target task. The target program code set includes a plurality of lines of program code, and the target task includes at least one to-be-executed sub-task. If at least one line of program code in the target program code set is executed, the at least one to-be-executed sub-task included in the target task can be completed. If the entire target program code set is executed, the target task can be implemented. For example, if the target task is to increase brightness of a picture, add a filter 0008 to the picture, zoom in an eye of a user in the picture, and thin a face of the user in the picture, one to-be-executed sub-task is to increase the brightness of the picture, another to-be-executed sub-task is to add the filter 0008 to the picture, another to-be-executed sub-task is to zoom in the eye of the user in the picture, and the other to-be-executed sub-task is to thin the face of the user in the picture. It should be understood that the example herein is merely used for ease of understanding of this solution, and is not used to limit this solution.

Optionally, if this embodiment of this application is applied to an RPC application scenario, the target task may include at least one RPC task or two or more RPC tasks. The RPC task generally refers to a task that a current network device requests a remote network device to execute. Because each network device in a data processing system sequentially executes program code in the target program code set based on an indication of a program counter (program counter, PC) register, the target program code set can implicitly include an execution sequence of different RPC tasks in the at least two RPC tasks. This embodiment of this application provides a specific application scenario of this solution, and improves a degree of combination between this solution and the specific application scenario.

A format of the target program code set is described. If the first network device uses a Linux system, the target program code set may specifically use an executable and linkable file format (Executable and Linkable Format, ELF); or if the first network device uses a Windows system, the target program code set may specifically use a PE file format. It should be noted that the target program code set may also use another type of file format. Descriptions are provided in subsequent embodiments of this embodiment of this application by using an example in which an executable linkable file (referred to as an "ELF file") format is used for the target program code set. When another file format is used for the target program code set, refer to this application for understanding. Details are not described in embodiments of this application.

Further, the target program code set may include program code in an intermediate language (intermediate language, IL) form, or the target program code set may include program code in a machine language form. An intermediate language corresponds to a machine language. Original program code written by a user can be translated into program code in the intermediate language form. When a network device runs the program code, the program code in the intermediate language form is compiled into program code in the machine language, where the machine language is a binary that can be identified by a machine. For example, the intermediate language may be an extended Berkeley packet filter (extended Berkeley packet filter, eBPF) byte code (byte code), an intermediate language P4, a network programming language (network programming language, NPL), or another type of intermediate language. This is not exhaustive herein.

Specifically, manners of obtaining the target program code set are described. In an implementation, the first network device may be configured with a display and an input device (for example, a keyboard), and a user may enter, by using the keyboard, an original program code set corresponding to the target task. Correspondingly, the first network device displays, on the display, the original program code set written by the user.

Further, the first network device may directly compile, into a program code set in a machine language form, a plurality of lines of original program code written by the user, and determine the program code set in the machine language form as the target program code set; or the first network device may compile, by using an intermediate language compiler, a plurality of lines of original program code entered by the user, to obtain a plurality of lines of program code in an intermediate language form, so as to obtain the target program code. The intermediate language compiler may be specifically a low level virtual machine (low level virtual machine, LLVM) or another type of intermediate language compiler. This is not exhaustive herein.

In another implementation, the first network device may receive an original program code set, corresponding to the target task, sent by another network device. Further, the first network device may compile the original program code set corresponding to the target task into a plurality of lines of program code in a machine language form, and determine the plurality of lines of program code in the machine language form as the target program code set; or the first network device compiles the original program code set corresponding to the target task, to obtain a plurality of lines of program code in an intermediate language form, and determines the plurality of lines of program code in the intermediate language form as the target program code.

In still another implementation, the first network device may receive a program code set that is in an intermediate language form, corresponds to the target task, and sent by another network device, and the first network device may directly determine the program code set that is in the intermediate language form and corresponds to the target task as the target program code set.

In yet another implementation, the first network device may receive a program code set that is in a machine language form, corresponds to the target task, and sent by another network device, and the first network device may directly determine the program code set in the machine language form as the target program code.

202: The first network device obtains a first process context.

In this embodiment of this application, the first network device needs to obtain the first process context corresponding to the target program code set.

For content included in the first process context, in a case, the first network device does not run program code in the target program code set, and the first process context includes at least the target program code set, a register segment, and a data segment. Specifically, the first network device invokes a library function to analyze the target program code set, so as to generate the first process context corresponding to the target program code set. For example, the target program code set is an ELF file, the first network device invokes an ELF library function to analyze the ELF file, to create an ELF context (that is, an example of the first process file). It should be understood that the example herein is merely for ease of understanding this solution, and is not used to limit this solution.

Further, the register segment includes a value in a register (register) related to execution of the foregoing process. When the first network device does not run the program code in the target program code set, the register segment may include only the value in the program counter (program counter, PC) register, and the PC register indicates an address of to-be-executed program code. The value in the PC register is used as a specific implementation of first indication information in this embodiment of this application. The first indication information indicates a location, in the program code set, of a first start line of the at least one line of program code included in the target program code set, and the first start line is a start point when a second network device executes program code in the target program code set.

One or more lines of program code included in the target program code set include at least one variable. The data segment is used to store a value of a static variable in the target program code set, and the static variable includes a global static variable and a local static variable. When the first network device does not run the program code in the target program code set, the data segment stores all target parameters required for implementing the entire target task, that is, a variable corresponding to each target parameter is a static variable.

All the target parameters required for implementing the entire target task may also be understood as a target parameter required when each to-be-executed sub-task is executed. The target parameter refers to a parameter input by the user, and does not include a value generated by the network device in a process of running the program code in the target program code set. For example, if the target task is to transfer 100,000 yuan from an account of A to an account of B, obtained at least one target parameter includes an account number of A, an account number of B, and a transfer amount of 100,000 yuan. It should be understood that the example herein is merely for ease of understanding this solution, and is not used to limit this solution.

Further, manners of obtaining all the target parameters corresponding to the entire target task are described. In one case, the target program code set may carry all the target parameters corresponding to the entire target task, and the first network device may obtain, from the target program code set, all the target parameters corresponding to the entire target task, that is, obtain the target parameter required when the at least one to-be-executed sub-task is executed.

In another case, if the target program code set does not carry the target parameter, before performing step 202, the first network device further needs to obtain at least one target parameter corresponding to the target task. Specifically, in an implementation, the first network device may be configured with an input device. The input device includes but is not limited to a keyboard, a touchscreen, another input device, or the like. The first network device may obtain, by using the input device in a process of running the at least one line of program code in the target program code set, the at least one target parameter input by the user; or the first network device may receive the at least one target parameter sent by another network device. This is not limited herein.

It can be learned from the foregoing description that, when the first network device does not run the program code in the target program code set, the first process context may include at least the target program code set, the first indication information, and the at least one target parameter corresponding to the target task.

For content included in the first process context, in another case, if the first network device runs at least one line of program code in the target program code set by using a process to complete at least one to-be-executed sub-task included in the target task, the first process context includes at least the target program code set, a register segment, content in a stack (stack) related to execution of the foregoing process, and a data segment.

For content of the target program code set and the data segment, refer to the foregoing description. Details are not described herein again.

When the first network device runs the at least one line of program code in the target program code set by using the process, the register segment not only includes a value in the PC register, that is, not only includes first indication information. The register segment stores a value stored in a user register and a value stored in a system register in a process of running the program code by using the process, and the PC register is a type of system registers. The register segment includes values of all physical registers related to execution of the target task when the target task is interrupted, so that when execution of the target task is resumed on a network device, the value in the register segment is restored to the physical register on the foregoing network device. For example, the user register includes, for example, a register for storing a function parameter, a register for storing a function return value, a stack frame pointer (frame pointer, FP) register, and a register for storing a value of a variable. The system register includes a register configured to store a return address of a function corresponding to program code, a register configured to store a page table base address corresponding to the process, and the like. It should be noted that a quantity, names, and the like of registers in processors of different network devices are also different. That is, a specific type of register needs to be determined with reference to a register used by the first network device in a process of running the at least one line of program code, a processor architecture of a network device, or another factor. The example herein is merely for ease of understanding, is not used to limit this solution.

The target program code set corresponds to at least one function, that is, the first network device implements at least one function by running the at least one line of program code in the target program code set by using the process. A stack (stack) related to execution of the process is automatically allocated and released with the process of running the function by the process. For example, content in the stack related to execution of the process includes a parameter transferred by an invoker to the function, a value of a local variable corresponding to the function, and the like. It should be noted that the content included in and a layout of the stack change due to different processor architectures and function call agreements of the network device. Specific content included in the stack should be determined with reference to an actual situation. This is not limited herein.

It can be learned from the foregoing description that, when the first network device runs the at least one line of program code in the target program code set, the first process context not only includes the target program code set, the first indication information, and the at least one target parameter corresponding to the target task, but also includes data generated in the process in which the first network device runs the at least one line of program code in the target program code set by using the process.

Further, the target program code set includes program code corresponding to the at least one function. The function may include only an inline function, or may include only a non-inline function. The function may also include both an inline function and a non-inline function. The inline function is a function whose function body is in the target program code set, and the non-inline function is a function whose function body is not in the target program code set.

In this embodiment of this application, because the inline function is the function whose function body is in the target program code set, the inline function can be directly run based on the program code in the target program code set, and a local call address of the function does not need to be determined, and program code corresponding to the function body does not need to be locally called. This helps improve efficiency of an entire target task execution process, can define the function in a customized manner by directly writing the function body into the target program code set, that is, extend a type of a function that can be executed, and helps further improve flexibility of this solution.

Optionally, if the target program code set includes program code corresponding to the non-inline function, the first process context may further include a symbol table and a redirection segment. At least the following information can be extracted by analyzing the symbol table and the redirection segment: symbols of all non-inline functions in the target program code set and instruction offsets of program code corresponding to each non-inline function in the target program code set. The symbol of the non-inline function may also be referred to as a function name of the non-inline function. The instruction offset of the program code corresponding to the non-inline function in the target program code set indicates a call location of the program code corresponding to the non-inline function in the target program code set.

Optionally, if the target program code set includes program code corresponding to one or more non-inline functions, the first network device may further obtain a function number corresponding to a function name of each non-inline function in the one or more non-inline functions, and the function number of the target non-inline function is carried in first request information.

Specifically, for a process of obtaining a function number of any non-inline function (for ease of description, referred to as a "target non-inline function" below) in the one or more non-inline functions, in an implementation, a second mapping relationship may be preconfigured on the first network device. The second mapping relationship indicates a one-to-one mapping relationship between function names of a plurality of non-inline functions and function numbers of the plurality of non-inline functions. The plurality of non-inline functions may include all functions in a function library of the first network device, that is, the second mapping relationship includes a mapping relationship between a function name of the target non-inline function and a function number of the target non-inline function. Therefore, the first network device can obtain the function number of the target non-inline function based on the function name of the target non-inline function and the second mapping relationship.

In another implementation, a rule for generating a function number of a non-inline function may be preconfigured on the first network device, and the first network device may generate the function number of the target non-inline function based on a function name of the target non-inline function and the preconfigured rule.

After obtaining the function number of the target non-inline function, the first network device may determine, based on the symbol table and the redirection segment in the first process context, the target instruction offset of the program code corresponding to the target non-inline function in the target program code set, that is, determine the call location of the program code corresponding to the target non-inline function in the target program code set. The first network device writes the function number of the target non-inline function into the program code corresponding to the target non-inline function.

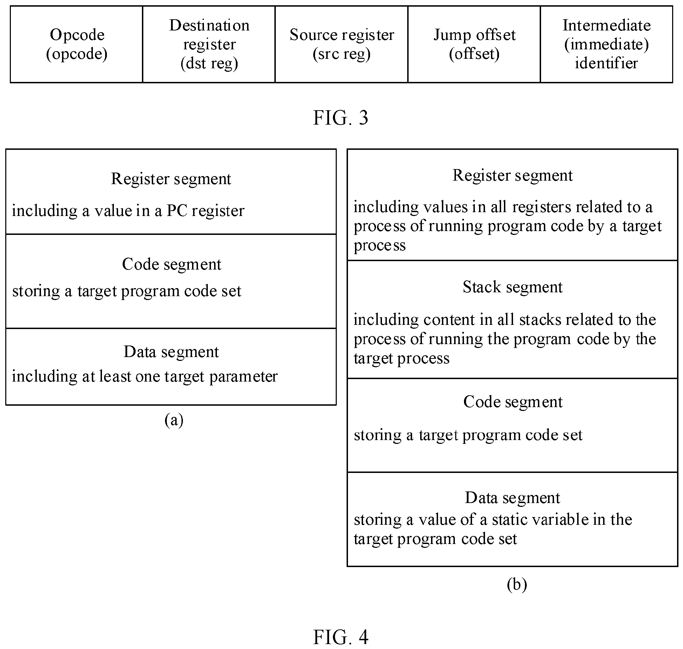

For more intuitive understanding of this solution, FIG. 3 is a schematic diagram of a structure of the program code in the data processing method according to this embodiment of this application. In FIG. 3, for example, the program code in the intermediate language form is used for the target program code set. As shown in FIG. 3, a line of program code may include an opcode (opcode) field, a destination register (dst reg) field, a source register (src reg) field, a jump offset (offset) field, and an intermediate (immediate) identifier field. The function number of the target non-inline function is written in the intermediate identifier field. Further, each instruction corresponding to the program code has an opcode, where the opcode indicates a form of an operation that should be performed by using the instruction; the destination register represents a register for storing a target operand; and the source register represents a register for storing a source operand. When the instruction is a jump instruction, the jump offset field indicates a distance between a next line of to-be-executed program code and program code that is being executed. When the instruction is an operation instruction, the intermediate identifier field is used to store an immediate. When the instruction is an instruction that invokes a non-inline function, the intermediate identifier field is used to store a number of the non-inline function. It should be noted that, in FIG. 3, only one line of program code in the intermediate language form is used as an example, and the example in FIG. 3 is merely for ease of understanding this solution, and is not used to limit this solution.

It should be noted that, if the first network device executes the at least one line of program code in the target program code set, before starting to execute the at least one line of program code in the target program code set, the first network device may first write the function number of each non-inline function corresponding to the target program code set into the program code corresponding to the non-inline function.

203: The first network device generates the first request message, where the first request message carries the first process context corresponding to the target task, and the first process context includes the program code set, the first indication information, and the at least one target parameter; if the at least one line of program code in the program code set is executed, at least one to-be-executed sub-task included in the target task can be completed; and the first indication information indicates a location, in the program code set, of a first start line of the at least one line of program code included in the program code set, and the target parameter is a parameter required when the at least one to-be-executed sub-task is executed.

In this embodiment of this application, after obtaining the first process context, the first network device needs to perform a packet encapsulation operation, that is, encapsulate the first process context obtained in step 202 into a packet, to generate the first request message. The first request message may be specifically represented as one or more packets. For description of the first process context, refer to the description in step 202. Details are not described herein again.

It should be noted that, if the first network device writes, into the program code, the function number of each non-inline function corresponding to the target program code set, in a process of performing packet encapsulation, the first network device does not need to encapsulate the symbol table and the redirection segment into the packet. Alternatively, if the first network device does not write, into the program code, the function number of each non-inline function corresponding to the target program code set, in a process of performing packet encapsulation, the first network device needs to encapsulate the target program code set, the symbol table, and the redirection segment into the packet.

For more intuitive understanding of this solution, FIG. 4 is a schematic diagram of two types of encapsulated content of the first request message in the data processing method according to this embodiment of this application. Two sub-schematic diagrams (a) and (b) are included in FIG. 4. Both the sub-schematic diagram (a) in FIG. 4 and the sub-schematic diagram (b) in FIG. 4 are based on an example in which the first network device has written the function number of each non-inline function corresponding to the target program code set into the program code. First, the sub-schematic diagram (a) in FIG. 4 represents content of the first process context included in the first request message when the first network device does not execute the program code in the target program code set. The first process context includes a register segment, a code segment, and a data segment. The register segment stores the value of the PC register (namely, the first indication information), the code segment stores the target program code set, and the data segment stores all the target parameters corresponding to the target task.

The sub-schematic diagram (b) in FIG. 4 represents content of the first process context included in the first request message when the first network device executes the at least one line of program code in the target program code set by using one or more target processes. The first process context includes a register segment, content in a stack, a code segment, and a data segment. The register segment includes values in all registers (including values of PC registers) related to a process of running program code by a target process; content in the stack includes content in all stacks related to the process of running the program code by the target process; the code segment stores the target program code set; and the data segment is used to store a value of a static variable in the target program code set, includes the target parameter corresponding to the at least one to-be-executed sub-task, and further includes a value of a static variable generated in the process of running program code by the target process. It should be understood that the example in FIG. 4 is merely for ease of understanding this solution, and is not used to limit this solution.

Optionally, the first request information further includes a first mapping relationship, and the target program code set, the first indication information, the at least one target parameter, and the first mapping relationship all belong to a same program virtual machine (virtual machine). That is, the first request message carries the program virtual machine. Specifically, the first network device allocates a memory to the program virtual machine. A size of the memory may be equal to a sum of a length of the first mapping relationship, a length of the target program code set, a first default length, a second default length, and a third default length.

The first default length is a default length allocated by the first network device to the register segment, the second default length is a default length allocated by the first network device to the content in the storage stack, and the third default length is a default length allocated by the first network device to the data segment. For example, the first default length may be specifically 256 bytes, that is, values of 32 8-byte registers. The second default length may be specifically 2K bytes. It should be understood that examples of the first default length and the second default length herein are merely used to improve implementability of embodiments of this application, and are not used to limit this solution. A concept of the first mapping relationship is described subsequently, and is not described herein.

The first network device separately initializes offsets of the register segment, the content in the stack, the code segment, and the data segment relative to a start address of the program virtual machine, that is, separately determines start locations of the register segment, the stack segment, the code segment, and the data segment in the program virtual machine. If the first network device executes the at least one line of program code in the target program code set, the first network device further needs to initialize a stack frame pointer and a stack pointer.

After determining the start locations of the register segment, the stack segment, the code segment, and the data segment in the program virtual machine, the first network device writes the content in the first process context into corresponding locations of the program virtual machine. Specifically, in one case, if the first network device does not execute the program code in the target program code set, and the first network device writes, into the program code, the function number of each non-inline function corresponding to the target program code set, the first network device writes the value in the PC register into the register segment of the program virtual machine, writes the target program code set into the code segment of the program virtual machine, and writes, into the data segment of the program virtual machine, all the target parameters corresponding to the target program code set.

In another case, if the first network device executes the at least one line of program code in the target program code set, and the first network device writes, into the program code, the function number of each non-inline function corresponding to the target program code set, the first network device writes content in the register segment included in the first process context into the register segment of the program virtual machine, writes content in the stack included in the first process context into the stack segment of the program virtual machine, writes the target program code set into the code segment of the program virtual machine, and writes content in the data segment included in the first process context into the data segment of the program virtual machine.

In still another case, if the first network device does not execute the program code in the target program code set, and the first network device does not obtain the function number of each non-inline function corresponding to the target program code set, the first network device writes the value in the PC register into the register segment of the program virtual machine, writes the target program code set and the symbol table and the redirection segment included in the first process context into the code segment of the program virtual machine, and writes, into the data segment of the program virtual machine, all the target parameters corresponding to the target program code set.

The concept and a generation process of the first mapping relationship are described. The first mapping relationship is used to store a mapping relationship between at least one first address and at least one second address. The at least one first address may include a virtual address, in the program virtual machine, of the data segment of the program virtual machine. Correspondingly, the at least one second address may include a storage address, in a network device that stores the data segment, of the data segment of the program virtual machine. That is, the first address indicates a virtual address of the target parameter in the program virtual machine, and the second address indicates a storage address of the target parameter in a network device that stores the target parameter.

The at least one first address may include a virtual address, in the program virtual machine, of the code segment of the program virtual machine. Correspondingly, the at least one second address may include a storage address, in the network device that stores the code segment, of the code segment of the program virtual machine. The at least one first address may further include a virtual address, in the program virtual machine, of the register segment of the program virtual machine. Correspondingly, the at least one second address may further include a storage address, in the network device that stores the register segment, of the register segment of the program virtual machine.

The at least one first address may further include a virtual address, in the program virtual machine, of the stack segment of the program virtual machine. Correspondingly, the at least one second address may further include a storage address, in the network device that stores the stack segment, of the stack segment of the program virtual machine. It should be noted that the first mapping relationship is used to store a mapping relationship between a first address and a second address. If the first network device does not execute the program code in the target program code set, the second address in the first request message may be empty, that is, the first request message does not necessarily carry a storage address of data in the program virtual machine on the first network device. Whether the storage address is carried may be flexibly determined with reference to an actual application scenario.

Further, the storage address in the network device may be a virtual address in the network device, or may be a physical address in the network device. A specific address to be used may be determined with reference to an actual application scenario, and is not limited herein.

The first mapping relationship may be specifically represented as a page table, a hash table, another form, or the like. The page table may also be referred to as a mapping table (mapping table). Descriptions are provided in subsequent embodiments of this application only by using an example in which the first mapping relationship is specifically represented as the mapping table. When a data storage structure in another form is selected for the first mapping relationship, refer to this application for understanding. Details are not described in this embodiment of this application. For example, a size of the mapping table may be less than or equal to 512 bytes.

Specifically, the first mapping relationship may include three attribute fields: a virtual address of data in the program virtual machine, a data length, and a storage address of the data in a stored network device. Further, the first mapping relationship may use segment-based mapping, or the first mapping relationship may use non-segment-based mapping, or the first mapping relationship may use both segment-based mapping and non-segment-based mapping. For more intuitive understanding of this concept, the following discloses a specific representation manner of a mapping relationship in the mapping table by using an example in which segment-based mapping is used for the first mapping relationship:

$$\{VM\ VA\ start1,\ Length1,\ Host\ VA\ start1\}\ (1)$$

VM VA start1 represents the virtual address, in the program virtual machine, of the data segment of the program virtual machine. Length1 represents a length of the data segment of the program virtual machine. Host VA start1 represents the virtual address, in the stored network device, of the data segment of the program virtual machine. It should be understood that the example in Formula (1) is merely for ease of understanding this solution, and is not used to limit this solution.

Further, for example, all data in the program virtual machine is placed at a virtual address 0x10000-0x12000, and the code segment of the program virtual machine is placed at a virtual address 0x10500-0x10900 of the stored network device. It is assumed that a start storage address of the code segment in the program virtual machine is set to Ox80000, mapping entries that are in the first mapping relationship and correspond to the code segment may be (Ox80000, Ox400, 0x10500). Ox80000 represents a start virtual address of the code segment of the program virtual machine in the program virtual machine, 0x400 represents the length of the code segment of the program virtual machine, and 0x10500 represents the virtual address, in the stored network device, of the code segment in the program virtual machine. It should be understood that the example herein is merely for ease of understanding this solution, and is not used to limit this solution.

When a network device (for ease of description, subsequently referred to as a "target network device") invokes a memory allocation function to allocate a virtual memory in the target network device, the target network device may add a new mapping relationship entry to the first mapping relationship, where the new mapping relationship entry indicates a mapping relationship between a virtual address of the allocated virtual memory in the program virtual machine and a storage address of the allocated virtual memory in the target network device. For example, the memory allocation function may be specifically a mmap function, a malloc function, or another function for memory allocation. The virtual memory may also be referred to as a dynamic memory.

Optionally, if another remote network device is allowed to access the dynamic memory allocated in the foregoing process, the first mapping relationship may further include two attribute fields: identification information of a network device in which data is stored and a remote access key (Rkey). In this embodiment, the dynamic memory that allows remote access may be referred to as a shared memory.

Further, the target network device may further register a shared memory that is allowed to be accessed by another network device. The target network device registers with a network adapter device by using the dynamic memory allocated in the foregoing process, to obtain the remote access key, and then writes the identification information of the target network device and the remote access key (Rkey) into the first mapping relationship.

It should be noted that the target network device is a network device that runs program code corresponding to the memory allocation function in an entire data processing system. If the first network device executes the at least one line of program code in the target program code set, the target network device may specifically represent the first network device, or the target network device may specifically represent the second network device. Specifically, the target network device is which network device needs to be determined with reference to a specific case in which each network device executes the program code. This is not limited herein.

For more intuitive understanding of this concept, the following discloses a specific representation manner of a mapping relationship in the mapping table:

$$\{VM\ VA\ start2,\ Length2,\ Host\ VA\ start2,\ Host\ ID2,\ Rkey2\}\ (2)$$

VM VA start2 represents a virtual address, in the program virtual machine, of the virtual memory allocated by the target network device by using the memory allocation function. Length2 represents a length of the virtual memory allocated by the target network device by using the memory allocation function. Host VA start1 represents a virtual address, in the target network device, of the virtual memory allocated by the target network device by using the memory allocation function. Host ID2 represents the identification information of the target network device. Rkey2 represents the remote access key used for accessing the shared memory of the target network device (namely, the virtual memory allocated by the target network device by using the memory allocation function). It should be understood that the example in Formula (2) is merely for ease of understanding this solution, and is not used to limit this solution.

Further, if running program code corresponding to a munmap function, the target network device may further release a shared memory pointed to by the munmap function, and delete, from a first mapping relationship, a mapping relationship entry corresponding to the munmap function.

It should be noted that a first mapping relationship entry and a second mapping relationship entry in the first mapping relationship may respectively indicate a mapping relationship between the address of the data segment in the program virtual machine and the storage address of the data segment in the stored network device, and a mapping relationship between the address of the code segment in the program virtual machine and the storage address of the code segment in the stored network device. Other mapping relationship entries in the first mapping relationship may be dynamically added and deleted in the first mapping relationship with running of program code.

In this embodiment of this application, the program code set, the first indication information, the at least one target parameter, and the first mapping relationship are encapsulated in the same program virtual machine, and the first mapping relationship indicates a virtual address, in the program virtual machine, of data in the program virtual machine and a storage address, in the stored network device, of the data in the program virtual machine. That is, when a network device runs the program code in the program code set through a process, security isolation can be implemented between the process and a process that is locally run on the network device.

Optionally, if the target intermediate language is used for the target program code set, the first request message further includes third indication information, where the third indication information indicates a type of the target intermediate language. The third indication information may include an arch field and a version (version) field. A value in the arch field indicates a type of intermediate language used by the target program code set. For description of the type of the intermediate language, refer to the foregoing description. A value in the version field indicates a version number of the intermediate language used by the target program code set. For example, if the type used by the intermediate language is eBPF, the specifically used intermediate language may be eBPFv1, eBPFv2, or an intermediate language of another version of eBPF. It should be understood that the example herein is merely for ease of understanding this solution, and is not used to limit this solution.

In this embodiment of this application, the first network device and the second network device may be different machines, and the form of the target intermediate language is used for the target program code set. Therefore, when a network device runs the program code in the target program code set, the program code may be compiled into a machine language appropriate for a type of the network device. Therefore, the solution provided in this embodiment of this application can be compatible with various types of network devices, and help extend an application scenario of this solution.

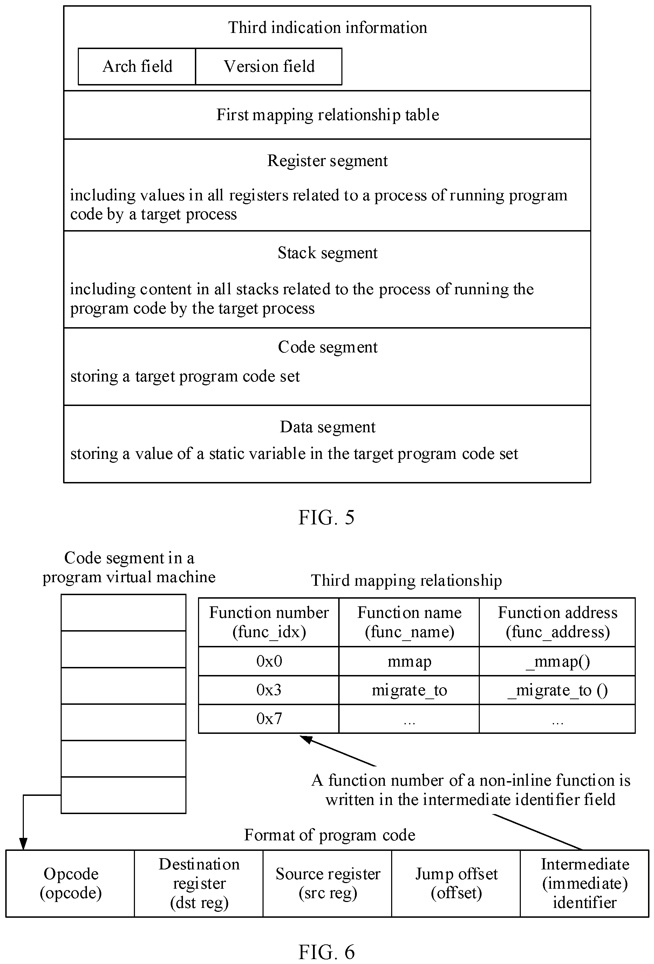

For more intuitive understanding of this solution, FIG. 5 is a schematic diagram of encapsulated content of the first request message in the data processing method according to this embodiment of this application. In FIG. 5, for example, the first request message carries the program virtual machine, and the first network device has executed the at least one line of code in the target program code set. As shown in FIG. 5, the first request message includes third indication information, a first mapping relationship table, a register segment, a stack segment, a code segment, and a data segment. For content included in the foregoing terms, refer to the foregoing descriptions. Details are not described herein. It should be understood that the example in FIG. 5 is merely for ease of understanding, and is not used to limit this solution.

204: The first network device sends the first request message to the second network device.

In this embodiment of this application, the first network device sends the first request message to the second network device. Correspondingly, the second network device receives the first request message sent by the first network device. Specifically, the first network device sends the first request message to a preset port of the second network device, and the preset port in the second network device keeps listening to the first request message sent by the first network device. The first request message may be represented as one or more packets. For example, a maximum size of one packet may be 512 MB (megabytes), 1 GB (gigabytes), or another size. This is not limited herein. It should be noted that the second network device needs to wait until all packets are collected before entering step 205.

205: The second network device determines, based on the first indication information, the location, in the program code set, of the first start line from the at least one line of program code included in the target program code set.

In this embodiment of this application, after obtaining the first request message, the second network device locally stores information carried in the first request message, and needs to run the one or more lines of program code in the target program code set.

Optionally, if the first request message carries the first mapping relationship, that is, the target program code set, the first indication information, the at least one target parameter, and the first mapping relationship all belong to the same program virtual machine, after the second network device locally stores the information carried in the first request message, and before the second network device starts to run the at least one line of program code in the target program code set, the second network device further needs to update, based on storage addresses, in the program virtual machine, of the data segment and the code segment in the program virtual machine, mapping relationship entries in the first mapping relationship that correspond to the data segment and the code segment in the program virtual machine. If the first request message does not carry the first mapping relationship, that is, none of the target program code set, the first indication information, the at least one target parameter, and the first mapping relationship is included in the same program virtual machine, the second network device does not need to perform the foregoing step.

Optionally, when the first request message carries the function number of each non-inline function corresponding to the target program code set, and the second network device needs to be configured with a third mapping relationship, the code segment in the program virtual machine stores a symbol table pointer, and the first network device further needs to update a point address of the symbol table pointer to a storage address of the third mapping relationship on the second network device. If the first request message does not carry the function number of each non-inline function, the second network device does not need to perform the foregoing step.

The third mapping relationship includes a one-to-one mapping relationship between the function number of each function in the function library and a call address of the function on the second network device, that is, the third mapping relationship includes a one-to-one mapping relationship between the function number of each non-inline function corresponding to the target program code set and a call address of the non-inline function on the second network device. Optionally, the third mapping relationship may further include a one-to-one mapping relationship between the function number and the function name of each function in the function library. The third mapping relationship may be specifically stored in a form of a table, an array, a linked list, or the like. For more intuitive understanding of this solution, content of the third mapping relationship is described below by using an example in which the third mapping relationship is stored in the table.

**Table 1**

| Function number (func_idx) | Function name (func_name) | Function address (func_address) |
|---|---|---|
| 0x0 | mmap | _mmap() |
| 0x3 | migrate_to | _migrate_to () |
| 0x7 | ... | ... |

Table 1 shows the third mapping relationship by using three rows of data in the third mapping relationship as an example. It should be noted that the third mapping relationship may include more one-to-one mapping relationships between function numbers and call addresses of the functions, and the third mapping relationship may not include a column of the function name. The example in Table 1 is merely for ease of understanding this solution, and is not used to limit this solution.

It should be noted that an execution queue of the program virtual machine is pre-initialized in the second network device. After performing the foregoing step, the second network device may set a status of the program virtual machine carried in the first request message to ready, and place the program virtual machine in the execution queue of the program virtual machine.

A process in which the second network device runs the at least one line of program code in the target program code set is described. The second network device obtains the value in the PC register in the first process context, that is, obtains the first indication information, so that the second network device determines, based on the value in the PC register in the register segment, the location, in the program code set, of the first start line from the at least one line of program code included in the target program code set.

206: The second network device runs, based on the at least one target parameter and by using the first start line of the at least one line of program code as a start point, the at least one line of program code included in the target program code set, to complete at least one to-be-executed sub-task included in the target task.

In this embodiment of this application, the second network device runs, based on the at least one target parameter and by using the first start line of the at least one line of program code as the start point, the at least one line of program code included in the target program code set, to complete the at least one to-be-executed sub-task included in the target task. In a process in which the second network device runs the at least one line of program code, the second network device further obtains a value of a register in the register segment of the first process context other than the PC register, and writes the value in the register segment of the first process context into a physical register of the second network device.

Optionally, if the first network device has executed the at least one line of program code in the target program code set, the second network device may further obtain content of the stack included in the first process context, and write the content of the stack included in the first process context into a stack of the second network device.

Specifically, a compilation process of the program code in the target program code set is described. When the second network device runs program code corresponding to the non-inline function, in one case, if the first request message carries the second indication information, the second network device determines, based on the second indication information, the type of the intermediate language used by the program code in the target program code set, and then obtains a compiler corresponding to the determined intermediate language, to compile the at least one line of program code in the target program code set into program code in the machine language. The compilation process may use a manner of instant compilation of program code in the intermediate language. For example, if a type of the intermediate language is eBPF, a compiler corresponding to the intermediate language may be an eBPF instant compiler (just-in-time compiler, JIT).

In another case, if the target program code set includes the program code in the machine language, the second network device may directly run the program code in the target program code set.

For a running process of the program code in the target program code set, if the second network device runs program code corresponding to a target non-inline function, in one case, the second network device obtains a call address of the target non-inline function in the second network device based on a function number of the target non-inline function, to run the target non-inline function, where the target non-inline function is one of the at least one non-inline function corresponding to the target program code set.

More specifically, in an implementation, if the program code corresponding to the target non-inline function carries a function number of the target non-inline function, and the third mapping relationship is preconfigured in the second network device, the second network device may obtain the call address of the target non-inline function in the second network device from the third mapping relationship based on the function number of the target non-inline function, to run the target non-inline function.

For more intuitive understanding of this solution, FIG. 6 is a schematic diagram of running the non-inline function in the data processing method according to this embodiment of this application. As shown in FIG. 6, the code segment of the program virtual machine includes a plurality of lines of program code. When an instruction corresponding to a line of program code is to call the non-inline function, an intermediate identifier field of the line of program code stores the function number of the non-inline function, so that the second network device can obtain, from the third mapping relationship based on the function number of the non-inline function carried in the program code, the call address of the non-inline function on the second network device, and then run the target non-inline function. It should be understood that the example in FIG. 6 is merely for ease of understanding this solution, and is not used to limit this solution.

In this embodiment of this application, because the function number is generally simpler than the function name, compared with directly using the function name of the non-inline function to search for the call address of the function, using the function number of the non-inline function to search for the call address of the function can improve efficiency of calling the non-inline function, and help improve execution efficiency of the entire target task.

In another implementation, if a rule for generating the function number of the non-inline function is preconfigured in the second network device, the second network device may generate the function number of the target non-inline function based on the function name of the target non-inline function, obtain the call address of the target non-inline function in the second network device from the third mapping relationship based on the function number of the target non-inline function, and run the target non-inline function.

In another case, if the third mapping relationship is not configured on the second network device, the second network device may determine the call address of the target non-inline function on the second network device based on the function name of the target non-inline function, and run the target non-inline function.

207: The second network device performs a packet encapsulation operation to obtain a second request message, where the second request message includes a second process context, the second process context includes the target program code set, second indication information, and at least one intermediate result, the second indication information indicates a location, in the target program code set, of a second start line of the at least one line of program code included in the target program code set, the locations of the second start line and the first start line in the target program code set are different, and the intermediate result is intermediate data generated by the second network device in a process of running the at least one line of program code by the second network device.

In some embodiments of this application, in a process of running the at least one line of program code in the target program code set, the second network device may further trigger the second network device to stop running the program code in the target program code set, and re-perform the packet encapsulation operation to obtain the second request message. The second request message includes the second process context, and the second process context includes the target program code set, the second indication information, and the at least one intermediate result.

Further, both the second process context and the first process context are process contexts. For understanding of the second process context, refer to a concept of the first process context in the foregoing description when the first network device has executed the at least one line of program code in the target program code set. For meanings in the target program code set, refer to the foregoing descriptions. Details are not described herein again.

The second indication information indicates the location, in the target program code set, of the second start line, in the at least one line of program code included in the target program code set, where the second start line is a start point when the program code in the target program code set is to be executed, and the locations of the second start line and the first start line in the target program code set are different. The second indication information may also be specifically represented as a value in a PC register. Because the second network device updates the value in the PC register in the process of running the at least one line of program code in the target program code set, the locations of the second start line pointed by the second indication information and the first start line pointed by the first indication information in the target program code set are different.

The intermediate result is the intermediate data generated by the second network device in the process of running the at least one line of program code by the second network device. The intermediate result may include a value in a register related to the process in which the second network device runs the at least one line of program code, and content in a stack related to the process in which the second network device runs the at least one line of program code. For understanding of the value in the register and the content in the stack, refer to the foregoing descriptions. Details are not described herein again.

Specifically, a reason why the second network device is triggered to re-perform the packet encapsulation operation is described.

In one case, the second network device executes a target program code in the target program code set, triggers the second network device to re-perform the packet encapsulation operation to obtain the second request message, and sends the second request message.

Further, in an implementation, the target program code is specifically represented as a migration function. After invoking the migration function, the second network device triggers a process in which the second network device re-performs the packet encapsulation operation to obtain the second request message, and sends the second request message (that is, a process of performing a migration operation). Further, the migration function carries a communication address of a network device that receives the second request message.

In another implementation, the target program code does not include a migration function, but directly includes code corresponding to a migration operation "re-perform the packet encapsulation operation and send the obtained second request message", that is, when the second network device executes the target program code, the migration operation is directly triggered. Further, the target program code carries a communication address of a network device that receives the second request message.

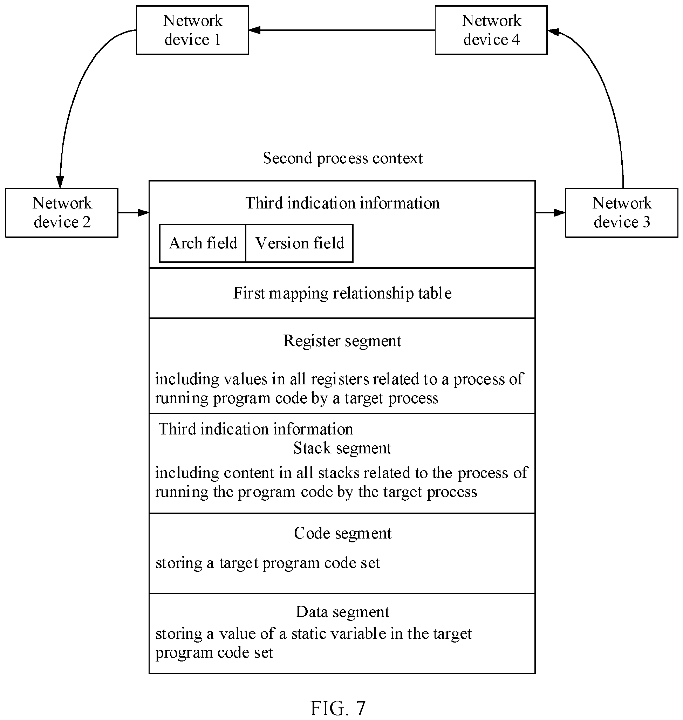

For more intuitive understanding of this solution, FIG. 7 is a schematic flowchart of the data processing method according to this embodiment of this application. In FIG. 7, for example, an entire data processing system includes a network device 1, a network device 2, a network device 3, and a network device 4. If the network device 1 has not executed program code in a target program code set, a first request message sent by the network device 1 to the network device 2 carries a first process context; or if the network device 1 has executed at least one line of code in a target program code set, a format of data carried in a first request message is the same as a format of a second process context in FIG. 7. For description of the second process context, refer to the foregoing description of FIG. 5.

In a process in which the network device 2 runs at least one line of program code in the target program code set, the network device 2 executes the target program code, where the target program code is included in the program code set, and the target program code is used to execute a packet encapsulation operation to obtain a second request message; and sends the second request message to the network device 3, where the second request message carries the second process context. Operations performed by the network device 3 and the network device 4 are similar to operations performed by the network device 2. Details are not described herein. It should be understood that the example in FIG. 7 is merely for ease of understanding this solution, and is not used to limit this solution.

In this embodiment of this application, the second process context is encapsulated in the second request message, the second process context carries the target program code set, the second indication information, and the at least one intermediate result, that is, which line in the target program code set has been run and the intermediate data generated by the second network device in the process of running the at least one line of program code by the second network device may be known based on the second process context. Therefore, after the second network device sends the second request message to another network device, the another network device can continue to execute a next to-be-executed sub-task in the target task. This implements pipelined mutual assistance between a plurality of network devices, and completes the complete target task.

In another case, when the first request message carries a first mapping relationship, in a process in which the second network device runs the at least one line of program code in the target program code set, if the second network device determines, based on the first mapping relationship, that to-be-accessed data is on a remote network device, the second network device may also trigger re-execution of the packet encapsulation operation, to send the second request message to the network device that stores the to-be-accessed data.

That is, when the second network device determines, based on the first mapping relationship, that the to-be-accessed data is in a shared memory on a remote network device, re-execution of the packet encapsulation operation may be triggered again. It should be noted that the second network device may need to access a shared memory on the first network device, or may need to access a shared memory on a network device other than the first network device and the second network device. A specific remote network device on which the to-be-accessed data is located should be flexibly determined with reference to a requirement of an actual application scenario.

Optionally, when the second network device finds that the to-be-accessed data is located on the remote network device, the second network device may further determine, based on the first mapping relationship, whether a size of the to-be-accessed data is greater than or equal to a preset threshold. Only when the to-be-accessed data is greater than or equal to the preset threshold, the packet encapsulation operation is triggered, to send the second request message to the network device that stores the to-be-accessed data.

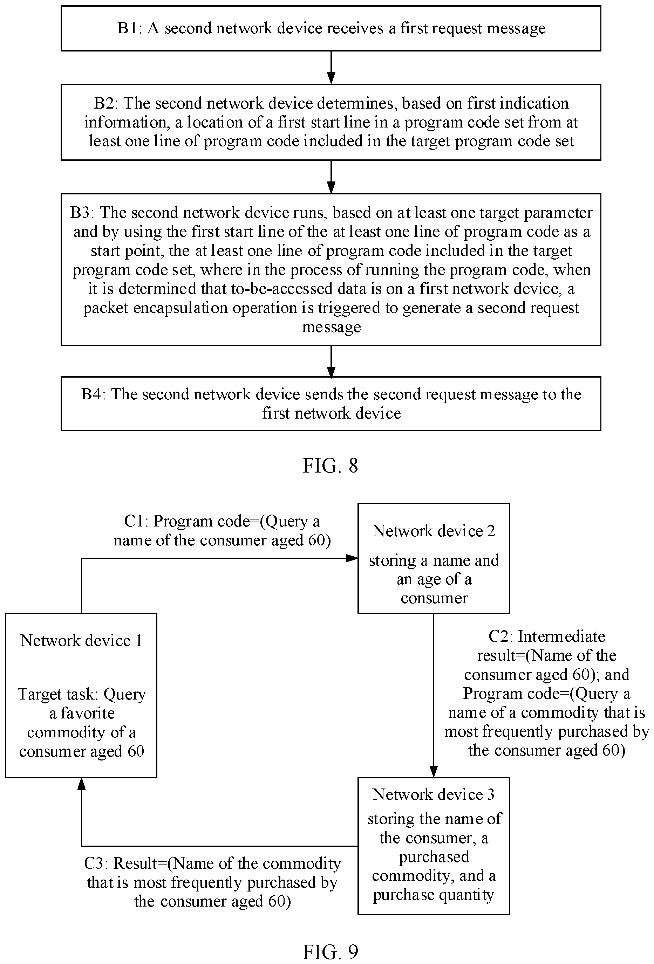

For more intuitive understanding of this solution, FIG. 8 is a schematic flowchart of triggering the second network device to perform packet encapsulation in the data processing method according to this embodiment of this application. As shown in FIG. 8, B1: The second network device receives the first request message. For content included in the first request message, refer to the foregoing descriptions. Details are not described herein again. B2: The second network device determines, based on the first indication information, the location of the first start line in the program code set from the at least one line of program code included in the target program code set. B3: The second network device runs, based on the at least one target parameter and by using the first start line of the at least one line of program code as the start point, the at least one line of program code included in the target program code set, where in the process of running the program code, when it is determined that the to-be-accessed data is on the first network device, the packet encapsulation operation is triggered to generate the second request message. B4: The second network device sends the second request message to the first network device. It should be noted that, in FIG. 8, only an example in which the to-be-accessed data is on the first network device is used. In an actual application scenario, the to-be-accessed data may be on a network device other than the first network device and the second network device, for example, a third network device. The example in FIG. 8 is merely for ease of understanding, and is not used to limit this solution.

In still another case, when either of the foregoing two cases occurs, the second network device may be triggered to re-perform the packet encapsulation operation.

208: The second network device sends the second request message.

In some embodiments of this application, after performing the packet encapsulation operation to obtain the second request message, the second network device may send the second request message to a network device other than the second network device. The another network device may be specifically represented as the first network device, or may be represented as the third network device. This is not limited herein.

In this embodiment of this application, if the second network device has completed the entire target task, and after step 206 is performed, if this embodiment of this application is applied to an RPC application scenario, after completing the entire target task, the second network device needs to send, to the first network device, an execution result (which may also be referred to as an RPC response message) corresponding to the entire target task.

Further, the second network device may send only the execution result corresponding to the entire target task to the first network device, or may send the second request message to the first network device. A manner in which the second network device sends the execution result to the first network device is not limited herein.

Further, a manner in which the second network device discovers that the entire target task is completed is as follows: If currently running program code is an exit instruction, and a depth of a stack related to the running program code is 0, it indicates that the entire target task has been completed. It should be noted that, if not the second network device completes the entire target task, but another network device in the entire data processing system completes the entire target task, a manner in which the network device determines to complete the target task and a manner in which the network device sends an execution result to the first network device are similar to those in the foregoing descriptions.

If a network device that receives the second request message still needs to continue to execute at least one line of program code in the target program code set, after receiving the second request message, the another network device performs steps similar to steps 205 to 208. For details, refer to the description. Details are not described herein again.

For more intuitive understanding of this solution, FIG. 9 is a schematic flowchart of a data processing method according to an embodiment of this application. In FIG. 9, for example, an entire data processing system includes three network devices. A target task initiated by a network device 1 is to query a favorite commodity of a consumer aged 60. A network device 2 stores a name and an age of each consumer, a network device 3 stores a name of a consumer, a name of a purchased commodity, and a purchase quantity. Therefore, a target program code set corresponding to the target task indicates two to-be-executed sub-tasks, a to-be-executed sub-task 1 is to query a name of the consumer aged 60, and the to-be-executed sub-task 2 is to query, based on the name of the consumer aged 60, a name of the commodity that is most frequently purchased by the consumer aged 60. Specifically, C1: The network device 1 sends first request information to the network device 2, where the first request information carries the target program code set, a target parameter, and first indication information, and the target parameter is 60. C2: The network device 2 runs at least one line of program code in the target program code set to execute the to-be-executed sub-task 1 to obtain the name of the consumer aged 60, performs a packet encapsulation operation to generate a second request message, and sends the second request message to the network device 3, where the second request message carries the target program code set, an intermediate result, and second indication information, and the intermediate result is the name of the consumer aged 60. C3: The network device 3 runs at least one line of program code in the target program code set to execute the to-be-executed sub-task 2 to obtain the name of the commodity that is most frequently purchased by the consumer aged 60; and the network device 3 sends a result corresponding to the target task to the network device 1, where the result is the name of the commodity that is most frequently purchased by the consumer aged 60. It should be understood that the example in FIG. 9 is merely for ease of understanding, and is not used to limit the solution.

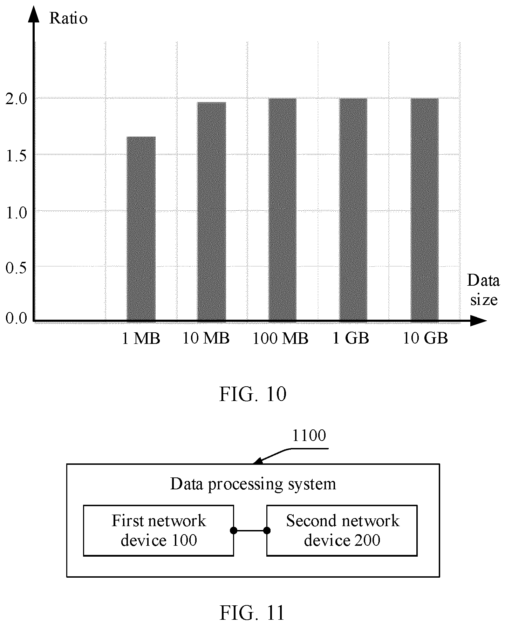

To have more direct understanding of beneficial effect brought by an embodiment of this application, the following provides descriptions with reference to actual test data. FIG. 10 is a schematic diagram of beneficial effect brought by this embodiment of this application. In FIG. 10, for example, this embodiment of this application is applied to an RPC application scenario. Herein, for example, a to-be-executed sub-task included in a target task needs to be executed on at least two network devices.

A vertical coordinate in FIG. 10 represents a ratio of network transmission period in a conventional RPC manner to network transmission period in a solution provided in this embodiment of this application, and a horizontal coordinate in FIG. 10 represents a data size of an intermediate result ranging from 1 MB to 10 GB. In the conventional RPC manner, a client (a network device) sends an RPC request to a first server (another network device). After receiving a first RPC response message, the client encapsulates an intermediate result obtained from the first RPC response message into an RPC parameter, and then sends a second RPC request to a second server (still another network device), and so on. As shown in FIG. 10, when a data volume of the intermediate result is greater than or equal to 1 MB, the network transmission period in a manner provided in this embodiment of this application is shorter than the network transmission period in the conventional RPC manner. When the data volume of the intermediate result is greater than or equal to 10 MB, the manner provided in this embodiment of this application reduces network transmission period by approximately 50% compared with the conventional RPC manner.

Based on embodiments corresponding to FIG. 1 to FIG. 10, to better implement the foregoing solutions in embodiments of this application, the following further provides related devices configured to implement the foregoing solutions. FIG. 11 is a system architectural diagram of a data processing system according to an embodiment of this application. The data processing system 1100 includes at least a first network device 100 and a second network device 200. The first network device 100 is configured to: obtain first request information, and send the first request information to the second network device 200, where the first request message carries a first process context corresponding to a target task, the first process context includes a program code set, first indication information, and at least one target parameter, and the program code set includes at least one line of program code. The second network device 200 is configured to: receive the first request message, and determine, based on the first indication information, a location of a first start line in the program code set from the at least one line of program code included in the program code set. The second network device 200 is further configured to run, based on the at least one target parameter and by using the first start line of the at least one line of program code as a start point, the at least one line of program code included in the program code set, to complete at least one to-be-executed sub-task included in the target task, where the target parameter is a parameter required when the at least one to-be-executed sub-task is executed.

In a possible design, the second network device 200 is further configured to: execute target program code, where the target program code is included in the program code set, and the target program code is used to execute a packet encapsulation operation to obtain a second request message; and send the second request message to a third network device. The second request message includes a second process context, the second process context includes the program code set, second indication information, and at least one intermediate result, the second indication information indicates a location, in the program code set, of a second start line of the at least one line of program code included in the program code set, the locations of the second start line and the first start line in the program code set are different, and the intermediate result is intermediate data generated by the second network device 200 in a process of running the at least one line of program code by the second network device 200.

In a possible design, the first request information further includes a first mapping relationship, the program code set, the first indication information, the at least one target parameter, and the first mapping relationship all belong to a same program virtual machine, the first mapping relationship is used to store a mapping relationship between a first address and a second address, the first address indicates a virtual address of the target parameter in the program virtual machine, and the second address indicates a storage address of the target parameter in a network device that stores the target parameter.

In a possible design, the method is applied to a remote procedure call RPC scenario, and the target task includes at least two RPC tasks.

In a possible design, if a target intermediate language is used for the program code set, the first request message further includes third indication information, where the third indication information indicates a type of the target intermediate language.

In a possible design, the program code set includes program code corresponding to an inline function, and the inline function is a function whose function body is in the program code set.

In a possible design, the program code set includes program code corresponding to a non-inline function, and the non-inline function is a function whose function body is not in the program code set. The first network device 100 is further configured to obtain a function number of a target non-inline function corresponding to a function name of the target non-inline function, where the first request message carries the function number of the target non-inline function, and the target non-inline function is one of at least one non-inline function corresponding to the program code set. The second network device 200 is specifically configured to obtain a call address of the target non-inline function in the second network device 200 based on the function number of the target non-inline function, to run the target non-inline function.

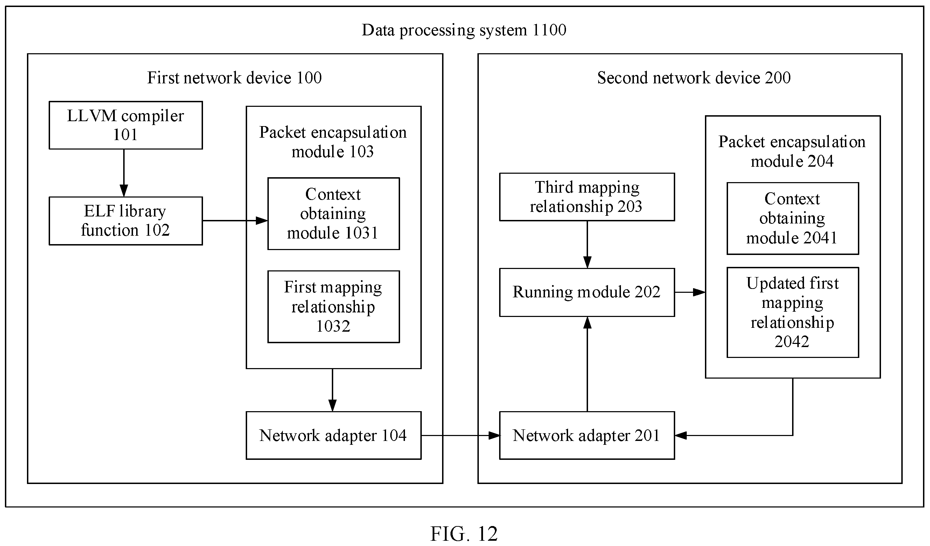

For more intuitive understanding of this solution, FIG. 12 is a schematic diagram of a structure of the data processing system according to this embodiment of this application. In FIG. 12, for example, the first network device 100 and the second network device 200 run a Linux system. The data processing system 1100 includes the first network device 100 and the second network device 200. The first network device 100 includes an LLVM compiler 101, an ELF library function 102, a packet encapsulation module 103, and a network adapter 104. The packet encapsulation module 103 includes a context obtaining module 1031 and a first mapping relationship 1032. The second network device 200 includes a network adapter 201, a running module 202, a third mapping relationship 203, and a packet encapsulation module 204. The packet encapsulation module 204 includes a context obtaining module 2041 and an updated first mapping relationship 2042.

Specifically, after obtaining at least one line of original program code corresponding to the target task, the first network device 100 may compile, by using the LLVM compiler 101, the original program code corresponding to the target task into program code in an intermediate language, to obtain the target program code set, where the target program code set includes a plurality of lines of program code in the intermediate language. The context obtaining module 1031 performs an analysis operation by using the ELF library function 102 to generate the first process context corresponding to the target program code set. The packet encapsulation module 103 further generates the first mapping relationship 1032, encapsulates the first process context and the first mapping relationship into the same program virtual machine to generate the third indication information, and performs a packet encapsulation operation to obtain the first request information. The target program code set includes the program code corresponding to the non-inline function, and the program code corresponding to the non-inline function carries the function number of the non-inline function. The first network device 100 sends, through the network adapter 104, the first request message to the network adapter 201 in the second network device.

After the second network device 200 obtains the first request message through the network adapter 201, the running module 202 locally stores the first process context and the third indication information, and updates the first mapping relationship 1032. In a process in which the running module 202 runs the at least one line of program code in the target program code set, when running the program code corresponding to the target non-inline function, the running module 202 determines the call address of the target non-inline function in the second network device 200 based on the function number of the target non-inline function and the third mapping relationship 203, and runs the target non-inline function based on the call address.

When an operation pointed to by the program code that is running by the running module 202 is a migration operation, the context obtaining module 2041 in the packet encapsulation module 204 needs to obtain the second process context, and the packet encapsulation module 204 performs the packet encapsulation operation to obtain the second request message, where the second request message carries the second process context and the updated first mapping relationship 2042. The second network device 200 sends the second request message to another network device through the network adapter 201. It should be understood that, for specific implementations of the steps, specific meanings of terms, and the like in the foregoing descriptions, refer to descriptions in FIG. 2 to FIG. 9. Details are not described herein again. In addition, the example in FIG. 12 is merely for ease of understanding this solution, and is not used to limit this solution.

It should be noted that the data processing system 1100 may further include another network device. In FIG. 11 and FIG. 12, only an interaction process between the first network device 100 and the second network device 200 is used as the example. Content such as information exchange and an execution process between the first network device 100 and the second network device 200 is based on a same concept as the method embodiments corresponding to FIG. 2 to FIG. 9 in this application. For specific content, refer to descriptions in the foregoing method embodiments of this application. Details are not described herein again.

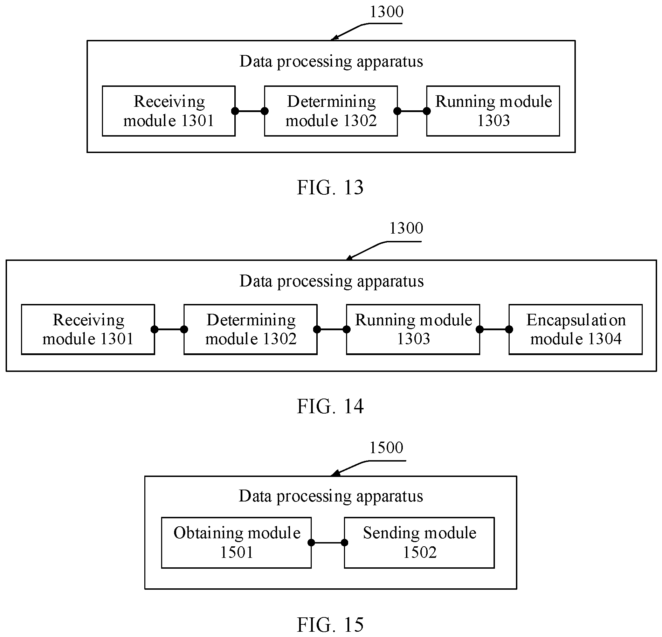

Refer to FIG. 13. An embodiment of this application further provides a data processing apparatus. FIG. 13 is a schematic diagram of a structure of the data processing apparatus according to this embodiment of this application. The data processing apparatus 1300 may include: a receiving module 1301, configured to receive a first request message, where the first request message carries a first process context corresponding to a target task, the first process context includes a program code set, first indication information, and at least one target parameter, and the program code set includes at least one line of program code; a determining module 1302, configured to determine, based on the first indication information, a location of a first start line in the program code set from the at least one line of program code included in the program code set; and a running module 1303, configured to run, based on the at least one target parameter and by using the first start line of the at least one line of program code as a start point, the at least one line of program code included in the program code set, to complete at least one to-be-executed sub-task included in the target task, where the target parameter is a parameter required when the at least one to-be-executed sub-task is executed.

In a possible design, FIG. 14 is a schematic diagram of a structure of the data processing apparatus according to this embodiment of this application. The data processing apparatus 1300 further includes an encapsulation module 1304, configured to: execute target program code, where the target program code is included in a program code set, and the target program code is used to execute a packet encapsulation operation to obtain a second request message; and send the second request message to a third network device, where the second request message includes a second process context, the second process context includes a program code set, second indication information, and at least one intermediate result, the second indication information indicates a location, in the program code set, of a second start line of the at least one line of program code included in the program code set, the locations of the second start line and the first start line in the program code set are different, and an intermediate result is intermediate data generated by the second network device in a process of running the at least one line of program code by the second network device.

In a possible design, the first request information further includes a first mapping relationship, the program code set, the first indication information, the at least one target parameter, and the first mapping relationship all belong to a same program virtual machine, the first mapping relationship is used to store a mapping relationship between a first address and a second address, the first address indicates a virtual address of the target parameter in the program virtual machine, and the second address indicates a storage address of the target parameter in a network device that stores the target parameter.

In a possible design, the apparatus is applied to a remote procedure call RPC scenario, and the target task includes at least two RPC tasks.

It should be noted that content such as information exchange and an execution process between the modules/units in the data processing apparatus 1300 is based on a same concept as the method embodiments corresponding to FIG. 2 to FIG. 9 in this application. For specific content, refer to the descriptions in the foregoing method embodiments in this application. Details are not described herein again.

Refer to FIG. 15. An embodiment of this application further provides a data processing apparatus. FIG. 15 is a schematic diagram of a structure of the data processing apparatus according to this embodiment of this application. The data processing apparatus 1500 includes: an obtaining module 1501, configured to obtain first request information; and a sending module 1502, configured to send the first request information to a second network device, where the first request message carries a first process context corresponding to a target task, the first process context includes a program code set, first indication information, and at least one target parameter, if at least one line of program code in the program code set is executed, at least one to-be-executed sub-task included in the target task can be completed, the first indication information indicates a location, in the program code set, of a first start line of the at least one line of program code included in the program code set, and the target parameter is a parameter required when the at least one to-be-executed sub-task is executed.

In a possible design, the first request information further includes a first mapping relationship, the program code set, the first indication information, the at least one target parameter, and the first mapping relationship all belong to a same program virtual machine, the first mapping relationship is used to store a mapping relationship between a first address and a second address, the first address indicates a virtual address of the target parameter in the program virtual machine, and the second address indicates a storage address of the target parameter in a network device that stores the target parameter.

It should be noted that content such as information exchange and an execution process between the modules/units in the data processing apparatus 1500 is based on a same concept as the method embodiments corresponding to FIG. 2 to FIG. 9 in this application. For specific content, refer to the descriptions in the foregoing method embodiments in this application. Details are not described herein again.

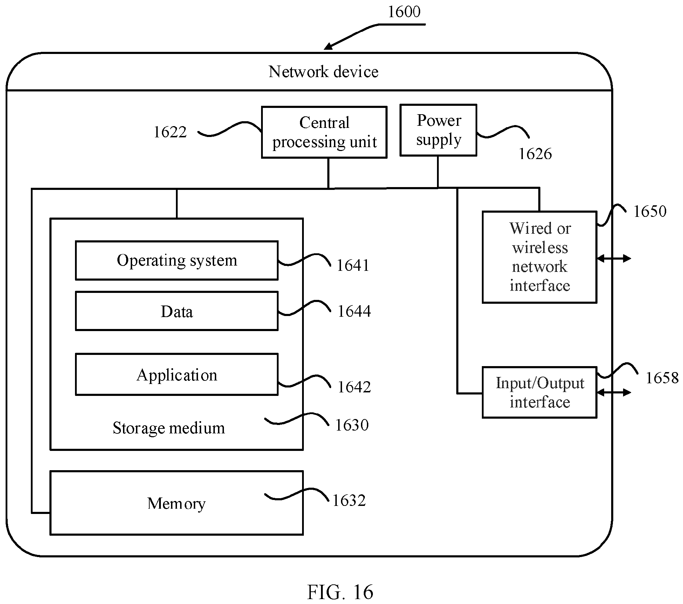

An embodiment of this application further provides a network device. FIG. 16 is a schematic diagram of a structure of the network device according to this embodiment of this application. The network device 1600 is configured to implement functions of the first network device in embodiments corresponding to FIG. 2 to FIG. 9, or the network device 1600 is configured to implement functions of the second network device in embodiments corresponding to FIG. 2 to FIG. 9. Specifically, the network device 1600 may have a large difference due to different configurations or performance, and may include one or more central processing units (central processing units, CPUs) 1622 (for example, one or more processors) and a memory 1632, and one or more storage media 1630 (for example, one or more mass storage devices) that stores an application 1642 or data 1644. The memory 1632 and the storage medium 1630 may be transitory storage or persistent storage. A program stored in the storage medium 1630 may include one or more modules (not shown in the figure), and each module may include a series of instruction operations to be performed on a server. Further, the central processing unit 1622 may be configured to communicate with the storage medium 1630, to perform, on the network device 1600, the series of instruction operations in the storage medium 1630.

The network device 1600 may further include one or more power supplies 1626, one or more wired or wireless network interfaces 1650, one or more input/output interfaces 1658, and/or one or more operating systems 1641, such as Windows Server™, Mac OS X™, Unix™, Linux™, and FreeB SD™.

In a case, the central processing unit 1622 in the network device 1600 is configured to perform steps performed by the first network device in embodiments corresponding to FIG. 2 to FIG. 9. For a specific implementation of performing, by the central processing unit 1622, the steps performed by the first network device in embodiments corresponding to FIG. 2 to FIG. 9 and beneficial effect brought by the steps, refer to descriptions in method embodiments corresponding to FIG. 2 to FIG. 9. Details are not described herein again.

In another case, the central processing unit 1622 in the network device 1600 is configured to perform steps performed by the second network device in embodiments corresponding to FIG. 2 to FIG. 9. For a specific implementation of performing, by the central processing unit 1622, the steps performed by the second network device in embodiments corresponding to FIG. 2 to FIG. 9 and beneficial effect brought by the steps, refer to descriptions in method embodiments corresponding to FIG. 2 to FIG. 9. Details are not described herein again.

An embodiment of this application further provides a computer-readable storage medium. The computer-readable storage medium stores a program for data processing. When the program is run on a computer, the computer is enabled to perform steps performed by the first network device in the methods described in embodiments shown in FIG. 2 to FIG. 9, or the computer is enabled to perform steps performed by the second network device in the methods described in embodiments shown in FIG. 2 to FIG. 9.

An embodiment of this application further provides a computer program product. When the computer program product runs on a computer, the computer is enabled to perform steps performed by the first network device in the methods described in embodiments shown in FIG. 2 to FIG. 9, or the computer is enabled to perform steps performed by the second network device in the methods described in embodiments shown in FIG. 2 to FIG. 9.

An embodiment of this application further provides a circuit system. The circuit system includes a processing circuit. The processing circuit is configured to perform steps performed by the first network device in the methods described in embodiments shown in FIG. 2 to FIG. 9, or the processing circuit is configured to perform steps performed by the second network device in the methods described in embodiments shown in FIG. 2 to FIG. 9.

The data processing apparatus, the first network device, or the second network device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the methods described in embodiments shown in FIG. 2 to FIG. 9. Optionally, the storage unit is a storage unit in the chip, for example, a register or a cache; or the storage unit may be a storage unit that is in the radio access device and that is outside the chip, for example, a read-only memory (read-only memory, ROM), another type of static storage device that can store static information and instructions, or a random access memory (random access memory, RAM).

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including a dedicated integrated circuit, a dedicated CLU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in the form of a software product. The computer software product is stored in a readable storage medium, such as a floppy disk, a USB flash drive, a removable hard disk, a ROM, a RAM, a magnetic disk, or an optical disc of a computer, and includes a plurality of instructions that enable a computer device (which may be a personal computer, a server, a network device, or the like) to perform the methods described in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

**Claims**

1. A data processing system, wherein the data processing system comprises a first network device and a second network device;

   the first network device is configured to: obtain first request information, and send the first request information to the second network device, wherein the first request message carries a first process context corresponding to a target task, the first process context comprises a program code set, first indication information, and at least one target parameter, and the program code set comprises at least one line of program code;
   the second network device is configured to: receive the first request message, and determine, based on the first indication information, a location of a first start line in the program code set from the at least one line of program code comprised in the program code set; and
   the second network device is further configured to run, based on the at least one target parameter and by using the first start line of the at least one line of program code as a start point, the at least one line of program code comprised in the program code set, to complete at least one to-be-executed sub-task comprised in the target task, wherein the target parameter is a parameter required when the at least one to-be-executed sub-task is executed.

2. The system according to claim 1, wherein the second network device is further configured to: execute target program code, wherein the target program code is comprised in the program code set, and the target program code is used to execute a packet encapsulation operation to obtain a second request message; and send the second request message to a third network device, wherein

   the second request message comprises a second process context, the second process context comprises the program code set, second indication information, and at least one intermediate result, the second indication information indicates a location, in the program code set, of a second start line of the at least one line of program code comprised in the program code set, the locations of the second start line and the first start line in the program code set are different, and the intermediate result is intermediate data generated by the second network device in a process of running the at least one line of program code by the second network device.

3. The system according to claim 1 or 2, wherein the first request information further comprises a first mapping relationship, the program code set, the first indication information, the at least one target parameter, and the first mapping relationship all belong to a same program virtual machine, the first mapping relationship is used to store a mapping relationship between a first address and a second address, the first address indicates a virtual address of the target parameter in the program virtual machine, and the second address indicates a storage address of the target parameter in a network device that stores the target parameter.

4. The system according to claim 1 or 2, wherein the method is applied to a remote procedure call RPC scenario, and the target task comprises at least two RPC tasks.

5. The system according to claim 1 or 2, wherein a target intermediate language is used for the program code set, the first request message further comprises third indication information, and the third indication information indicates a type of the target intermediate language.

6. The system according to claim 1 or 2, wherein the program code set comprises program code corresponding to an inline function, and the inline function is a function whose function body is in the program code set.

7. The system according to claim 1 or 2, wherein the program code set comprises program code corresponding to at least one non-inline function, and the non-inline function is a function whose function body is not in the program code set;

the first network device is further configured to obtain a function number that is of a target non-inline function and that corresponds to a function name of the target non-inline function, the target non-inline function is one of the at least one non-inline function, the first request message carries the function number of the target non-inline function, and the target non-inline function is one of the at least one non-inline function corresponding to the program code set; and
the second network device is specifically configured to obtain a call address of the target non-inline function in the second network device based on the function number of the target non-inline function, to run the target non-inline function.

8. A data processing method, wherein the method is applied to a second network device, and the method comprises:

receiving a first request message, wherein the first request message carries a first process context corresponding to a target task, the first process context comprises a program code set, first indication information, and at least one target parameter, and the program code set comprises at least one line of program code;
determining, based on the first indication information, a location of a first start line in the program code set from the at least one line of program code comprised in the program code set; and
running, based on the at least one target parameter and by using the first start line of the at least one line of program code as a start point, the at least one line of program code comprised in the program code set, to complete at least one to-be-executed sub-task comprised in the target task, wherein the target parameter is a parameter required when the at least one to-be-executed sub-task is executed.

9. The method according to claim 8, wherein after the running the at least one line of program code comprised in the program code set, to complete at least one to-be-executed sub-task comprised in the target task, the method further comprises:

executing target program code, wherein the target program code is comprised in the program code set, and the target program code is used to execute a packet encapsulation operation to obtain a second request message; and sending the second request message to a third network device, wherein
the second request message comprises a second process context, the second process context comprises the program code set, second indication information, and at least one intermediate result, the second indication information indicates a location, in the program code set, of a second start line of the at least one line of program code comprised in the program code set, the locations of the second start line and the first start line in the program code set are different, and the intermediate result is intermediate data generated by the second network device in a process of running the at least one line of program code by the second network device.

**10.** The method according to claim 8 or 9, wherein the first request information further comprises a first mapping relationship, the program code set, the first indication information, the at least one target parameter, and the first mapping relationship all belong to a same program virtual machine, the first mapping relationship is used to store a mapping relationship between a first address and a second address, the first address indicates a virtual address of the target parameter in the program virtual machine, and the second address indicates a storage address of the target parameter in a network device that stores the target parameter.

**11.** The method according to claim 8 or 9, wherein the method is applied to a remote procedure call RPC scenario, and the target task comprises at least two RPC tasks.

**12.** A data processing method, wherein the method is applied to a first network device, and the method comprises:

obtaining first request information; and
sending the first request information to a second network device, wherein
the first request message carries a first process context corresponding to a target task, the first process context comprises a program code set, first indication information, and at least one target parameter, if at least one line of program code in the program code set is executed, at least one to-be-executed sub-task comprised in the target task can be implemented, the first indication information indicates a location, in the program code set, of a first start line of the at least one line of program code comprised in the program code set, and the target parameter is a parameter required when the at least one to-be-executed sub-task is executed.

**13.** The method according to claim 12, wherein the first request information further comprises a first mapping relationship, the program code set, the first indication information, the at least one target parameter, and the first mapping relationship all belong to a same program virtual machine, the first mapping relationship is used to store a mapping relationship between a first address and a second address, the first address indicates a virtual address of the target parameter in the program virtual machine, and the second address indicates a storage address of the target parameter in a network device that stores the target parameter.

**14.** A data processing apparatus, wherein the apparatus comprises:

a receiving module, configured to receive a first request message, wherein the first request message carries a first process context corresponding to a target task, the first process context comprises a program code set, first indication information, and at least one target parameter, and the program code set comprises at least one line of program code;
a determining module, configured to determine, based on the first indication information, a location of a first start line in the program code set from the at least one line of program code comprised in the program code set; and
a running module, configured to run, based on the at least one target parameter and by using the first start line of the at least one line of program code as a start point, the at least one line of program code comprised in the program code set, to complete at least one to-be-executed sub-task comprised in the target task, wherein the target parameter is a parameter required when the at least one to-be-executed sub-task is executed.

**15.** The apparatus according to claim 14, wherein the apparatus further comprises:

an encapsulation module, configured to: execute target program code, wherein the target program code is comprised in the program code set, and the target program code is used to execute a packet encapsulation operation to obtain a second request message; and send the second request message to a third network device, wherein
the second request message comprises a second process context, the second process context comprises the program code set, second indication information, and at least one intermediate result, the second indication information indicates a location, in the program code set, of a second start line of the at least one line of program code comprised in the program code set, the locations of the second start line and the first start line in the program code set are different, and the intermediate result is intermediate data generated by a second network device in a process of running the at least one line of program code by the second network device.

**16.** The apparatus according to claim 14 or 15, wherein the first request information further comprises a first mapping relationship, the program code set, the first indication information, the at least one target parameter, and the first mapping relationship all belong to a same program virtual machine, the first mapping relationship is used to store a mapping relationship between a first address and a second address, the first address indicates a virtual address of the target parameter in the program virtual machine, and the second address indicates a storage address of the target parameter in a network device that stores the target parameter.

17. The apparatus according to claim 14 or 15, wherein the apparatus is applied to a remote procedure call RPC scenario, and the target task comprises at least two RPC tasks.

18. A data processing apparatus, wherein the apparatus comprises:

an obtaining module, configured to obtain first request information; and
a sending module, configured to send the first request information to a second network device, wherein the first request message carries a first process context corresponding to a target task, the first process context comprises a program code set, first indication information, and at least one target parameter, if at least one line of program code in the program code set is executed, at least one to-be-executed sub-task comprised in the target task can be implemented, the first indication information indicates a location, in the program code set, of a first start line of the at least one line of program code comprised in the program code set, and the target parameter is a parameter required when the at least one to-be-executed sub-task is executed.

19. The apparatus according to claim 18, wherein the first request information further comprises a first mapping relationship, the program code set, the first indication information, the at least one target parameter, and the first mapping relationship all belong to a same program virtual machine, the first mapping relationship is used to store a mapping relationship between a first address and a second address, the first address indicates a virtual address of the target parameter in the program virtual machine, and the second address indicates a storage address of the target parameter in a network device that stores the target parameter.

20. A network device, comprising a processor, wherein the processor is coupled to a memory, the memory stores program instructions, and when the program instructions stored in the memory are executed by the processor, steps performed by the first network device according to any one of claims 1 to 7 are implemented, or when the program instructions stored in the memory are executed by the processor, steps performed by the second network device according to any one of claims 1 to 7 are implemented, or when the program instructions stored in the memory are executed by the processor, the method according to any one of claims 8 to 11 is implemented, or when the program instructions stored in the memory are executed by the processor, the method according to claim 12 or 13 is implemented.

21. A computer-readable storage medium, comprising a program, wherein when the program is run on a computer, the computer is enabled to perform steps performed by the first network device according to any one of claims 1 to 7, or the computer is enabled to perform steps performed by the second network device according to any one of claims 1 to 7, or the computer is enabled to perform the method according to any one of claims 8 to 11, or the computer is enabled to perform the method according to claim 12 or 13.

First network device 100

A1: Obtain a first request message, where the first request message carries a first process context corresponding to a target task, the first process context includes a target program code set, first indication information, and at least one target parameter, and the target program code set includes at least one line of program code

A2: First request message →

Second network device 200

A3: Determine a location of a first start line of program code in the target program code set from the at least one line of program code based on the first indication information

A4: Run, by using the first start line of the at least one line of program code as a start point, the at least one line of program code included in the target program code set, to complete at least one to-be-executed sub-task included in the target task, where the target parameter is a parameter required when the at least one to-be-executed sub-task is executed

FIG. 1

| First network device | | Second network device |
|---|---|---|

**201: Obtain a target program code set**

**202: Obtain a first process context**

**203: Generate a first request message, where the first request message carries the first process context corresponding to a target task, and the first process context includes the program code set, first indication information, and at least one target parameter; if at least one line of program code in the program code set is executed, at least one to-be-executed sub-task included in the target task can be completed; and the first indication information indicates a location, in the program code set, of a first start line of the at least one line of program code included in the program code set, and the target parameter is a parameter required when the at least one to-be-executed sub-task is executed**

204: First request message ⟶

**205: Determine, based on the first indication information, the location of the first start line in the program code set from the at least one line of program code included in the target program code set**

**206: Run, based on the at least one target parameter and by using the first start line of the at least one line of program code as a start point, the at least one line of program code included in the target program code set, to complete the at least one to-be-executed sub-task included in the target task**

**207: Perform a packet encapsulation operation to obtain a second request message, where the second request message includes a second process context, the second process context includes the target program code set, second indication information, and at least one intermediate result, the second indication information indicates a location, in the target program code set, of a second start line of the at least one line of program code included in the target program code set, the locations of the second start line and the first start line in the target program code set are different, and the intermediate result is intermediate data generated by the second network device in a process of running the at least one line of program code by the second network device**

**208: Send the second request message**

FIG. 2

| Opcode (opcode) | Destination register (dst reg) | Source register (src reg) | Jump offset (offset) | Intermediate (immediate) identifier |
|---|---|---|---|---|
| | | | | |

FIG. 3

| Register segment |
|---|
| including a value in a PC register |
| **Code segment** <br> storing a target program code set |
| **Data segment** <br> including at least one target parameter |

(a)

| Register segment |
|---|
| including values in all registers related to a process of running program code by a target process |
| **Stack segment** <br> including content in all stacks related to the process of running the program code by the target process |
| **Code segment** <br> storing a target program code set |
| **Data segment** <br> storing a value of a static variable in the target program code set |

(b)

FIG. 4

| Third indication information |
|---|
| Arch field \| Version field |
| First mapping relationship table |
| Register segment<br><br>including values in all registers related to a process of running program code by a target process |
| Stack segment<br><br>including content in all stacks related to the process of running the program code by the target process |
| Code segment<br>storing a target program code set |
| Data segment<br>storing a value of a static variable in the target program code set |

FIG. 5

Code segment in a program virtual machine

Third mapping relationship

| Function number (func_idx) | Function name (func_name) | Function address (func_address) |
|---|---|---|
| 0x0 | mmap | _mmap() |
| 0x3 | migrate_to | _migrate_to () |
| 0x7 | ... | ... |

A function number of a non-inline function is written in the intermediate identifier field

Format of program code

| Opcode (opcode) | Destination register (dst reg) | Source register (src reg) | Jump offset (offset) | Intermediate (immediate) identifier |
|---|---|---|---|---|

FIG. 6

Network
device 1

Network
device 4

Second process context

Network
device 2

| Third indication information | |
| --- | --- |
| Arch field | Version field |

First mapping relationship table

Register segment

including values in all registers related to a process of
running program code by a target process

Third indication information
Stack segment

including content in all stacks related to the process of
running the program code by the target process

Code segment

storing a target program code set

Data segment
storing a value of a static variable in the target
program code set

Network
device 3

FIG. 7

B1: A second network device receives a first request message

B2: The second network device determines, based on first indication information, a location of a first start line in a program code set from at least one line of program code included in the target program code set

B3: The second network device runs, based on at least one target parameter and by using the first start line of the at least one line of program code as a start point, the at least one line of program code included in the target program code set, where in the process of running the program code, when it is determined that to-be-accessed data is on a first network device, a packet encapsulation operation is triggered to generate a second request message

B4: The second network device sends the second request message to the first network device

FIG. 8

C1: Program code=(Query a name of the consumer aged 60)

Network device 2

storing a name and an age of a consumer

Network device 1

Target task: Query a favorite commodity of a consumer aged 60

C2: Intermediate result=(Name of the consumer aged 60); and Program code=(Query a name of a commodity that is most frequently purchased by the consumer aged 60)

Network device 3

storing the name of the consumer, a purchased commodity, and a purchase quantity

C3: Result=(Name of the commodity that is most frequently purchased by the consumer aged 60)

FIG. 9

FIG. 10

FIG. 11

**Data processing system 1100**

Second network device 200

Packet encapsulation module 204
- Context obtaining module 2041
- Updated first mapping relationship 2042

Third mapping relationship 203

Running module 202

Network adapter 201

First network device 100

Packet encapsulation module 103
- Context obtaining module 1031
- First mapping relationship 1032

LLVM compiler 101

ELF library function 102

Network adapter 104

**FIG. 12**

1300

Data processing apparatus

| Receiving module 1301 | Determining module 1302 | Running module 1303 |

FIG. 13

1300

Data processing apparatus

| Receiving module 1301 | Determining module 1302 | Running module 1303 | Encapsulation module 1304 |

FIG. 14

1500

Data processing apparatus

| Obtaining module 1501 | Sending module 1502 |

FIG. 15

1600

Network device

1622 — Central processing unit    Power supply — 1626

Wired or wireless network interface — 1650

Operating system — 1641

Data — 1644

Application — 1642

Storage medium — 1630

Input/Output interface — 1658

Memory — 1632

FIG. 16

## INTERNATIONAL SEARCH REPORT

| | International application No. |
|---|---|
| | **PCT/CN2022/101469** |

**A. CLASSIFICATION OF SUBJECT MATTER**

G06F 8/70(2018.01)i

According to International Patent Classification (IPC) or to both national classification and IPC

**B. FIELDS SEARCHED**

Minimum documentation searched (classification system followed by classification symbols)

G06F8/-

Documentation searched other than minimum documentation to the extent that such documents are included in the fields searched

Electronic data base consulted during the international search (name of data base and, where practicable, search terms used)

CNABS; CNTXT; CNKI: 业务, 任务, 处理, 请求, 代码, 初始, 起始, 开始, 指示, 参数, 条件, 查询, 虚拟机, 内联函数; DWPI; SIPOABS; EPTXT; USTXT: business, task, request, code, virtual machine, VM, parameter

**C. DOCUMENTS CONSIDERED TO BE RELEVANT**

| Category* | Citation of document, with indication, where appropriate, of the relevant passages | Relevant to claim No. |
|---|---|---|
| X | CN 112181450 A (BEIJING DAJIA INTERCONNECTION INFORMATION TECHNOLOGY CO., LTD.) 05 January 2021 (2021-01-05) description, paragraphs [0094]-[0096], [0103], [0116]-[0118], and [0124] | 1-21 |
| A | CN 109800011 A (SHENZHEN CTRIP NETWORK TECHNOLOGY CO., LTD.) 24 May 2019 (2019-05-24) entire document | 1-21 |
| A | CN 105975577 A (LETV HOLDINGS (BEIJING) CO., LTD. et al.) 28 September 2016 (2016-09-28) entire document | 1-21 |
| A | EP 3028210 A1 (OLOGN TECHNOLOGIES AG) 08 June 2016 (2016-06-08) entire document | 1-21 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 September 2022** | **29 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/101469**

| Patent document cited in search report | | | Publication date (day/month/year) | Patent family member(s) | | | Publication date (day/month/year) |
|---|---|---|---|---|---|---|---|
| CN | 112181450 | A | 05 January 2021 | None | | | |
| CN | 109800011 | A | 24 May 2019 | None | | | |
| CN | 105975577 | A | 28 September 2016 | WO | 2017190469 | A1 | 09 November 2017 |
| EP | 3028210 | A1 | 08 June 2016 | CA | 2918596 | A1 | 05 February 2015 |
| | | | | WO | 2015015473 | A1 | 05 February 2015 |
| | | | | US | 2015039891 | A1 | 05 February 2015 |
| | | | | EP | 3028210 | A1 | 08 June 2016 |
| | | | | EP | 3028210 | B1 | 08 January 2020 |
| | | | | US | 9948640 | B2 | 17 April 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110721122X